(19) Europäisches Patentamt
European Patent Office
Office européen des brevets

(11) **EP 3 968 647 A1**

(12) **EUROPEAN PATENT APPLICATION**
published in accordance with Art. 153(4) EPC

(43) Date of publication:
**16.03.2022 Bulletin 2022/11**

(21) Application number: **20913499.8**

(22) Date of filing: **24.12.2020**

(51) International Patent Classification (IPC):
*H04N 21/2662* *(2011.01)*

(52) Cooperative Patent Classification (CPC):
**H04N 21/2187; H04N 21/2662; H04N 21/6402;
H04N 21/647; H04N 21/845; H04N 21/8547**

(86) International application number:
**PCT/CN2020/138855**

(87) International publication number:
**WO 2021/143479 (22.07.2021 Gazette 2021/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.01.2020 CN 202010054830**

(71) Applicant: **Beijing Dajia Internet Information
Technology Co., Ltd.
Haidian District
Beijing 100085 (CN)**

(72) Inventor: **ZHOU, Chao
Beijing 100085 (CN)**

(74) Representative: **Yang, Shu
Withers & Rogers LLP
2 London Bridge
London SE1 9RA (GB)**

(54) **MEDIA STREAM TRANSMISSION METHOD AND SYSTEM**

(57) The present invention relates to the technical field of networks, and provides a media stream transmission method and system. The media stream transmission method comprises: when obtaining a media stream, determining target address information of a target bitrate from address information of the media stream of a plurality of bitrates; determining the initial position of a media frame corresponding to the target bitrate in the media stream; and sending a frame obtaining request carrying the target address information and the initial position to a server, to indicate a media frame that returns to the media stream at the target bitrate and starts from the initial position.

```
┌─────────────────────────────────────────────────────────────────┐
│ Determining, from address information of a media stream with a    │⟍ S31
│ plurality of bit rates, target address information of the media    │
│ stream with a target bit rate in response to a frame              │
│ acquisition instruction for the media stream                      │
└─────────────────────────────────────────────────────────────────┘
                              │
┌─────────────────────────────────────────────────────────────────┐
│ Determining a starting position of to-be-acquired media frames    │⟍ S32
│ corresponding to the target bit rate in the media stream          │
└─────────────────────────────────────────────────────────────────┘
                              │
┌─────────────────────────────────────────────────────────────────┐
│ Sending a frame acquisition request carrying the target address    │⟍ S33
│ information and the starting position to a server                  │
└─────────────────────────────────────────────────────────────────┘
```

FIG. 3

Description

CROSS-REFERENCE TO RELATED APPLICATION

The present disclosure claims priority to Chinese Patent Application No. 2020100548308, filed on January 17, 2020, and entitled "MEDIA STREAM TRANSMISSION METHOD, SYSTEM, DEVICE AND EQUIPMENT AND STORAGE MEDIUM," which is incorporated herein by reference in its entirety.

TECHNICAL FIELD

The present disclosure relates to the technical field of networks, and in particular, relates to a method and system for transmitting a media stream.

BACKGROUND

With the development of media transmission technologies, users can browse audio and video resources on terminals anytime and anywhere. At present, when a server transmits audio and video resources to a terminal (commonly known as a "stream pulling phase"), a fragmentation-based media transmission method is used.

The fragmentation-based media transmission method includes common dynamic adaptive streaming over HTTP (DASH for short, which is a standard developed by MPEG for HTTP-based adaptive streaming media transmission, wherein MPEG is short for moving picture experts group), HTTP live streaming (HLS for short, which is a standard developed by Apple Inc. for HTTP-based adaptive streaming media transmission), etc. However, the fragmentation-based media transmission method has a large delay.

SUMMARY

Embodiments of the present disclosure provide a method and system for transmitting a media stream. The technical solutions are as follows:

According to a first aspect of the embodiments of the present disclosure, a method for transmitting a media stream is provided, applied to a terminal. The method includes: determining, from address information of a media stream with a plurality of bit rates, target address information of the media stream with a target bit rate in response to a frame acquisition instruction for the media stream; determining a starting position of to-be-acquired media frames corresponding to the target bit rate in the media stream; and sending a frame acquisition request carrying the target address information and the starting position to a server, wherein the frame acquisition request is configured to instruct the server to return, at the target bit rate, the media frames starting from the starting position in the media stream.

According to a second aspect of the embodiments of the present disclosure, a method for transmitting a media stream is provided, applied to a server. The method includes: receiving a frame acquisition request, wherein the frame acquisition request carries target address information of a media stream with a target bit rate and a starting position of to-be-acquired media frames corresponding to the target bit rate in the media stream; acquiring, from an address corresponding to the target address information, the media frames starting from the starting position in response to the frame acquisition request; and transmitting the media frames starting from the starting position to a terminal at the target bit rate.

According to a third aspect of the embodiments of the present disclosure, a system for transmitting a media stream is provided, including a terminal and a server, wherein the terminal is configured to perform the foregoing method for transmitting a media stream applied to a terminal; and the server is configured to perform the foregoing method for transmitting a media stream applied to a server.

According to a fourth aspect of the embodiments of the present disclosure, an apparatus for transmitting a media stream is provided, applied to a terminal. The apparatus includes: a determining module and a sending module, wherein the determining module is configured to determine, from address information of a media stream with a plurality of bit rates, target address information of the media stream with a target bit rate in response to a frame acquisition instruction for the media stream; the determining module is further configured to determine a starting position of to-be-acquired media frames corresponding to the target bit rate in the media stream; and the sending module is configured to send a frame acquisition request carrying the target address information and the starting position to a server, wherein the frame acquisition request is configured to instruct the server to return, at the target bit rate, the media frames starting from the starting position in the media stream.

According to a fifth aspect of the embodiments of the present disclosure, an apparatus for transmitting a media stream is provided, applied to a server. The apparatus includes a receiving module, an acquiring module, and a transmission module, wherein the receiving module is configured to receive a frame acquisition request, wherein the frame acquisition request carries target address information of a media stream with a target bit rate and a starting position of to-be-acquired media frames corresponding to the target bit rate in the media stream; the acquiring module is configured to acquire, from an address corresponding to the target address information, the media frames starting from the starting position in response to the frame acquisition request; and the transmission module is configured to transmit the media frames starting from the starting position to a terminal at the target bit rate.

According to a sixth aspect of the embodiments of the present disclosure, an electronic device is provided, including: at least one processor; and at least one memory configured to store at least one instruction executable by the at least one processor, wherein the at least one processor, when loading and executing the at least one instruction, is caused to perform: determining, from address information of a media stream with a plurality of bit rates, target address information of the media stream with a target bit rate in response to a frame acquisition instruction for the media stream; determining a starting position of to-be-acquired media frames corresponding to the target bit rate in the media stream; and sending a frame acquisition request carrying the target address information and the starting position to a server, wherein the frame acquisition request is configured to instruct the server to return, at the target bit rate, the media frames starting from the starting position in the media stream.

According to a seventh aspect of the embodiments of the present disclosure, an electronic device is provided, including: at least one processor; and at least one memory configured to store at least one instruction executable by the at least one processor, wherein the at least one processor, when loading and executing the at least one instruction, is caused to perform: receiving a frame acquisition request, wherein the frame acquisition request carries target address information of a media stream with a target bit rate and a starting position of to-be-acquired media frames corresponding to the target bit rate in the media stream; acquiring, from an address corresponding to the target address information, the media frames starting from the starting position in response to the frame acquisition request; and transmitting the media frames starting from the starting position to a terminal at the target bit rate.

According to an eighth aspect of the embodiments of the present disclosure, a storage medium storing at least one instruction therein is provided, wherein the at least one instruction, when executed by a processor of an electronic device, causes the electronic device to perform: determining, from address information of a media stream with a plurality of bit rates, target address information of the media stream with a target bit rate in response to a frame acquisition instruction for the media stream; determining a starting position of to-be-acquired media frames corresponding to the target bit rate in the media stream; and sending a frame acquisition request carrying the target address information and the starting position to a server, wherein the frame acquisition request is configured to instruct the server to return, at the target bit rate, the media frames starting from the starting position in the media stream.

According to a ninth aspect of the embodiments of the present disclosure, a storage medium storing at least one instruction therein is provided, wherein the at least one instruction, when executed by a processor of an electronic device, causes the electronic device to perform: receiving a frame acquisition request, wherein the frame acquisition request carries target address information of a media stream with a target bit rate and a starting position of to-be-acquired media frames corresponding to the target bit rate in the media stream; acquiring, from an address corresponding to the target address information, the media frames starting from the starting position in response to the frame acquisition request; and transmitting the media frames starting from the starting position to a terminal at the target bit rate.

According to a tenth aspect of the embodiments of the present disclosure, a computer program product is provided, including at least one instruction, wherein the at least one instruction, when executed by a processor of an electronic device, causes the electronic device to perform the foregoing method for transmitting a media stream.

It should be understood that the above general description and the following detailed description are only exemplary and explanatory, and should not be construed as a limitation to the present disclosure.

## BRIEF DESCRIPTION OF THE DRAWINGS

In order to describe the technical solutions in the embodiments of the present disclosure more clearly, the accompanying drawings required to describe the embodiments are briefly described below. Apparently, the accompanying drawings described below are only some embodiments of the present disclosure. Those of ordinary skill in the art may further obtain other accompanying drawings based on these accompanying drawings without creative efforts.

FIG. 1 is a schematic diagram of an implementation environment of a method for transmitting a media stream according to an exemplary embodiment;
FIG. 2 is a principle schematic diagram of an FLV adaptive streaming (FAS) framework according to an embodiment of the present disclosure;
FIG. 3 is a flowchart of a method for transmitting a media stream according to an exemplary embodiment;
FIG. 4 is a flowchart of a method for transmitting a media stream according to an exemplary embodiment;
FIG. 5 is an interaction flowchart of a method for transmitting a media stream according to an exemplary embodiment;
FIG. 6 is a schematic diagram of a bit rate switching process according to an exemplary embodiment;
FIG. 7 is a principle schematic diagram of determining a target timestamp according to an embodiment of the present disclosure;
FIG. 8 is a block diagram of an apparatus for transmitting a media stream according to an exemplary embodiment;
FIG. 9 is a block diagram of an apparatus for transmitting a media stream according to an exemplary embodiment;
FIG. 10 is a block diagram of a terminal according to an embodiment of the present disclosure; and

FIG. 11 is a block diagram of a server according to an embodiment of the present disclosure.

## DETAILED DESCRIPTION

In order to make the objectives, technical solutions and advantages of the present disclosure clearer, implementations of the present disclosure will be further described in detail below in combination with the accompanying drawings.

To make those of ordinary skill in the art better understand the technical solutions of the present disclosure, the following clearly and completely describes the technical solutions in the embodiments of the present disclosure with reference to the accompanying drawings.

It should be noted that the terms "first", "second", and so on in the specification and claims of the present disclosure and in the accompanying drawings are intended to distinguish between similar objects but do not necessarily indicate a specific order or sequence. It should be understood that the data used in such a way may be exchanged under proper conditions to make it possible to implement the described embodiments of the present disclosure in sequences except those illustrated or described herein. The implementations described in the following exemplary embodiments do not represent all implementations consistent with the present disclosure. On the contrary, they are only embodiments of an apparatus and a method detailed in the appended claims and consistent with some aspects of the present disclosure.

User information involved in the present disclosure is information authorized by users or fully authorized by various parties.

The terms in the present disclosure are illustrated hereinafter.

I. FLV (Flash Video)

FLV is a streaming media format, which is a video format developed with the development of Flash MX (animation software). An extremely small file size and an extremely fast loading speed make it possible to watch a video file on the network (i.e., to view videos online). The development of FLV effectively solves the problem that an SWF (a dedicated file format for Flash) file exported after Flash is imported to a video file has a large size and cannot be used on the network desirably.

II. Streaming media

Streaming media adopts a streaming method, which refers to technology and process of compressing a sequence of media streams and sending resource packets over the Internet, so as to transmit the media streams in real-time on the Internet for viewing. This technology allows resource packets to be sent like streaming water. Without this technology, the entire media file needs to be downloaded before use, and the media streams can only be watched offline. Streaming can deliver live media streams or media streams pre-stored on a server. When a viewer user is watching the media streams, the media streams are played by specific playback software after reaching a viewer terminal of the viewer user.

III. FLV Adaptive Streaming (FAS)

FAS is a streaming resource transmission standard (also known as resource transmission protocol) proposed in the present disclosure. Unlike the traditional fragmentation-based media transmission method, the FAS standard can achieve frame-level media stream transmission. Instead of waiting for a complete video to arrive before sending resource packets to the terminal, the server determines a target timestamp after parsing a frame acquisition request from the terminal; if the target timestamp is less than zero, the server packets all media frames already cached starting from the target timestamp and sends the media frames to the terminal (without fragmentation). Thereafter, if the target timestamp is greater than or equal to zero or there is a real-time stream in addition to the cached media frames, the server sends media frames of the multimedia stream to the terminal frame by frame. It should be noted that a target bit rate is specified in the frame acquisition request. When the network bandwidth condition of the terminal changes, the terminal adaptively adjusts a bit rate to be switched, and resends a frame acquisition request corresponding to the bit rate to be switched, to achieve an effect of adaptively adjusting the bit rate of the media stream. The FAS standard can realize frame-level transmission.

IV. Live streaming and on-demand streaming

Live streaming: media streams are recorded in real-time, and an anchor user "pushes" a media stream (which means pushing a media stream in a streaming manner) to a server through an anchor terminal, and a viewer user triggers, on a viewer terminal, to enter a live streaming interface of the anchor user, and then "pulls" the media stream (which means pulling the media stream in a streaming manner) from the server to the viewer terminal. The viewer terminal decodes and plays the media stream, to play the video in real-time.

On-demand streaming: also known as video on demand (VOD). Media streams are pre-stored on a server, and the server can provide a media stream specified by the viewer user according to a requirement of a viewer user. Specifically, a viewer terminal sends a VOD request to the server, and the server sends a media stream to the viewer terminal after querying the media stream specified in the VOD request, that is, the viewer user can selectively play a particular media stream.

Intuitively, it is possible to control the playback progress of the content of VOD arbitrarily, but not the content of live streaming, wherein the playback speed of the live streaming content depends on the real-time live streaming progress of the anchor user.

The implementation environment in the embodiments of the present disclosure is described below with an example.

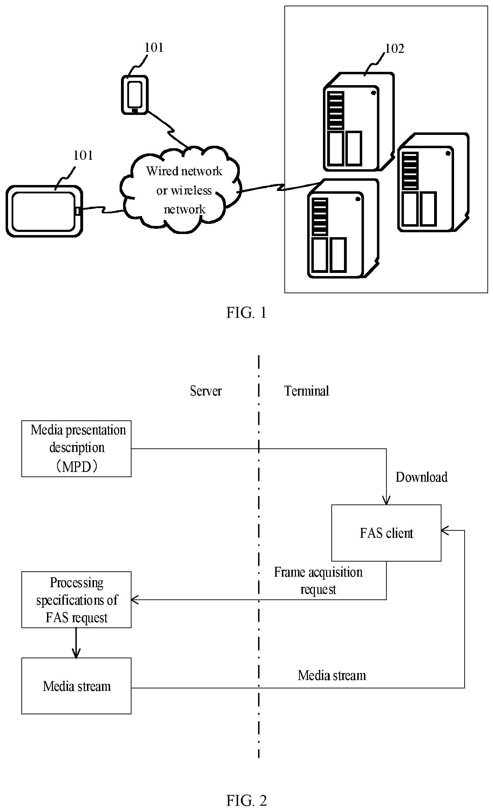

FIG. 1 is a schematic diagram of an implementation environment of a method for transmitting a media stream according to an exemplary embodiment. Referring to FIG. 1, the implementation environment includes at least one terminal and a server, which are described in detail below:

The at least one terminal is configured to transmit a media stream. A media codec component and a media playback component are installed on each terminal. The media codec component is configured to decode a media stream after receiving the media stream (e.g., resource packets transmitted in fragments, or media frames transmitted at a frame level), and the media playback component is configured to play the media stream after the media stream is decoded.

According to different user identities, the at least one terminal is classified into an anchor terminal and a viewer terminal. The anchor terminal corresponds to an anchor user and the viewer terminal corresponds to a viewer user. It should be noted that, one terminal is either an anchor terminal or a viewer terminal. For example, the terminal is an anchor terminal when the user is recording a live stream, and is a viewer terminal when the user is watching a live stream.

The at least one terminal and the server are connected via a wired network or a wireless network.

The server is configured to provide a media stream to be transmitted. The server includes at least one of the following: a server, a plurality of servers, a cloud computing platform, or a virtualization center. In some embodiments, the server undertakes primary computing and the at least one terminal undertakes secondary computing; or the server undertakes secondary computing and the at least one terminal undertakes primary computing; or a distributed computing architecture is used between the at least one terminal and the server to perform collaborative computing.

In an exemplary scenario, the server is a cluster content delivery network (CDN) server, and the CDN server includes a central platform and edge servers deployed at different locations. Through load balancing, content distribution, scheduling and other functional modules of the central platform, a terminal where the user is located can acquire required content (i.e., media stream) nearby relying on a local edge server, thereby reducing network congestion and improving the response speed and hit rate of terminal access.

In other words, the CDN server adds a caching mechanism between the terminal and the central platform. The caching mechanism refers to edge servers (such as WEB servers) deployed at different geographical locations. In performance optimization, the central platform will dispatch an edge server nearest to the terminal to serve the terminal according to distances between the terminal and the edge servers, to release content to the terminal more efficiently.

The media stream in the embodiments of the present disclosure includes, but is not limited to, at least one of the following: video resource, audio resource, image resource, or text resource, and the embodiments of the present disclosure do not specifically limit the type of the media stream. For example, the media stream is a live video stream of a network anchor, or a historical on-demand video pre-stored on a server, or a live audio stream of a radio anchor, or a historical on-demand audio pre-stored on a server.

In some embodiments, the device type of each terminal in the at least one terminal includes, but is not limited to at least one of the following: a television, a smartphone, a smart speaker, a vehicle terminal, a tablet computer, an e-book reader, a moving picture experts group audio layer III (MP3) player, a moving picture experts group audio layer IV (MP4) player, a laptop computer, or a desktop computer. In the following embodiments, the terminal including a smartphone is used as an example for description.

A person skilled in understands that the at least one terminal includes only one terminal, or the at least one terminal includes tens of or hundreds of terminals, or includes more terminals. The number and the device type of the at least one terminal are not limited in the embodiments of the present disclosure.

The implementation environment of the embodiments of the present disclosure is described above, and the method process provided in the embodiments of the present disclosure is illustrated below.

FIG. 2 is a principle schematic diagram of a FAS framework according to an embodiment of the present disclosure. As shown in FIG. 2, the embodiment of the present disclosure provides a FAS (streaming-based multi-bit-rate adaptive) framework, in which multimedia resources are transmitted between the least one terminal 101 and the server 102 based on a FAS protocol.

Any one of the terminals is used as an example for description. An application (also known as a FAS client) is installed on the terminal. The application is used for browsing multimedia resources. For example, the application is a short video application, a live streaming application, a video-on-demand application, a social application, a shopping application, etc. The embodiments of the present disclosure do not specifically limit the type of the application.

A user starts the application on the terminal to display a resource push interface (e.g., a home page or a functional interface of the application). The resource push interface includes thumbnail information of at least one multimedia resource. The thumbnail information includes at least one of the following: a title, an introduction, a publisher, a poster, a trailer, or a highlight clip. In response to the user's touch operation on the thumbnail information of any multimedia resource, the terminal may redirect from the resource push interface to a resource playback interface. The resource playback interface includes a playback option for the multimedia resource. In response to the user's touch operation on the playback option, the terminal downloads a media presentation description (MPD) of the multimedia resource from the server. Based on the media presentation description, the terminal determines target address information of the multimedia resource having the target bit rate, and sends a frame acquisition request (or known as a FAS request) carrying the target bit rate to the server, such that the server processes the frame acquisition request based on certain specifications (processing specifications of the FAS request). After locating media frames of the multimedia resource (consecutive media frames form a media stream), the server returns the media frames of the multimedia resource to the terminal at the target bit rate (i.e., the server returns the media stream to the terminal at the target bit rate). After receiving the media stream, the terminal invokes the media codec component to decode the media stream to obtain a decoded media stream, and invokes the media playback component to play the decoded media stream.

In some live streaming scenarios, the media stream requested by the terminal is usually a live video stream pushed by an anchor user to the server in real-time. In this case, the server transcodes the live video stream after receiving the live video stream of the anchor user, to obtain the live video stream with a plurality of bit rates, assigns different address information to the live video stream with different bit rates, and records the address information in the media presentation description. In response to frame acquisition requests carrying different address information, the server can return the corresponding live video stream at different bit rates.

Further, a mechanism for adaptive bit rate adjustment is provided. When the current network bandwidth condition of the terminal changes, the to-be-switched bit rate matching the current network bandwidth condition is adaptively adjusted accordingly. For example, when the bit rate needs to be switched, the terminal disconnects the media streaming link at the current bit rate and sends, to the server, a frame acquisition request carrying to-be-switched address information corresponding to the to-be-switched bit rate, and establishes a media streaming link based on the to-be-switched bit rate. Alternatively, the terminal directly re-initiates a frame acquisition request carrying the to-be-switched address information without disconnecting the media streaming link of the current bit rate, establishes a media streaming link based on the to-be-switched bit rate (for transmission of the new media stream), and uses the original media stream as a standby stream. Once the new media stream has a transmission exception, the terminal continues to play the standby stream, and dynamically adjusts the bit rate of the media stream in the playback process.

In the FAS framework described above, frame-level media stream transmission can be realized, and it is unnecessary to perform fragmentation-based transmission on multimedia resources.

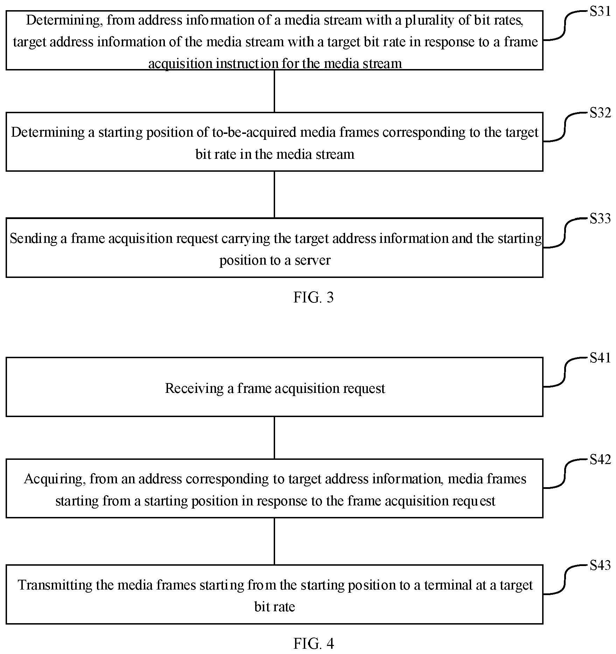

FIG. 3 is a flowchart of a method for transmitting a media stream according to an exemplary embodiment. The method is applied to a terminal and includes the following steps:

In S31, target address information of a media stream with a target bit rate is determined from address information of the media stream with a plurality of bit rates in response to a frame acquisition instruction for the media stream.

In some embodiments, the address information of the media stream with the plurality of bit rates is stored in a media presentation description of the media stream. Correspondingly, in S31, in response to the frame acquisition instruction for the media stream, the target address information of the media stream with the target bit rate is determined from the address information of the media stream with the plurality of bit rates which is included in the media presentation description of the media stream.

In S32, a starting position of to-be-acquired media frames corresponding to the target bit rate in the media stream is determined.

In S33, a frame acquisition request carrying the target address information and the starting position is sent to a server, wherein the frame acquisition request is configured to instruct the server to return, at the target bit rate, the media frames starting from the starting position in the media stream.

In some embodiments, in response to the frame acquisition instruction being triggered by a playback operation for the media stream, the step of determining the starting position of to-be-acquired media frames corresponding to the target bit rate in the media stream includes: determining a position of a media frame, which is generated at an operation time of the playback operation, in the media stream as the starting position; or determining a position of a media frame, which is selected by the frame acquisition instruction, in the media stream as the starting position; or determining a position of a first media frame in the media stream as the starting position.

In some embodiments, the frame acquisition instruction is triggered when playback status information of the media stream satisfies a bit rate switching condition.

In some embodiments, the step of determining, from the address information of the media stream with the plurality of bit rates, the target address information of the media stream with the target bit rate in response to the frame acquisition instruction for the media stream includes: acquiring playback status information of the media stream upon reception of any media frame in the media stream; and determining, from the address information of the media stream with the plurality of bit rates, the target address information of the media stream with the target bit rate in response to the playback status information satisfying a bit rate switching condition.

The step of determining the starting position of the to-be-acquired media frames corresponding to the target bit rate in the media stream includes: determining the starting position of the to-be-acquired media frames corresponding to the target bit rate in the media stream according to a position of the any media frame in the media stream.

In some embodiments, the step of determining, from the address information of the media stream with the plurality of bit rates, the target address information of the media stream with the target bit rate in response to the playback status information satisfying the bit rate switching condition includes: determining the target bit rate based on the playback status information and a current bit rate in response to the playback status information satisfying the bit rate switching condition; and determining, from the address information of the media stream with the plurality of bit rates which is included in the media presentation description of the media stream, the target address information of the media stream with the target bit rate in response to the target bit rate being not equal to the current bit rate.

In some embodiments, the playback status information includes a first cache volume, and the first cache volume is a current cache volume of the media stream that has been cached but not played; and the step of determining the target bit rate based on the playback status information and a current bit rate in response to the playback status information satisfying the bit rate switching condition includes: determining the target bit rate based on the playback status information and the current bit rate in response to the first cache volume being greater than a first cache volume threshold or the first cache volume being less than a second cache volume threshold, wherein the second cache volume threshold is less than the first cache volume threshold.

In some embodiments, the step of determining the target bit rate based on the playback status information and the current bit rate includes: acquiring a plurality of candidate bit rates; acquiring a second cache volume corresponding to each candidate bit rate according to a relationship between the plurality of candidate bit rates and the current bit rate, the playback status information, and a position of the any media frame of the media stream in a media frame group in which the any media frame is located; and determining the target bit rate from the plurality of candidate bit rates according to a relationship between the second cache volume corresponding to each candidate bit rate and the first cache volume threshold or the second cache volume threshold, wherein the second cache volume corresponding to each candidate bit rate is a cache volume of the media stream that has been cached but not played at the end of transmission of the media frame group in which the any media frame is located in response to a bit rate being switched to the candidate bit rate.

In some embodiments, the frame acquisition request further includes at least one of a first extended parameter or a second extended parameter, the first extended parameter indicates whether the media frames are audio frames, the second extended parameter indicates that transmission of the media frames in the media stream starts from a target timestamp indicated by the second extended parameter.

In some embodiments, the media presentation description includes a version number and a media description set, the version number includes at least one of a version number of the media presentation description or a version number of a resource transmission standard, the media description set includes multiple pieces of media description meta-information, each piece of media description meta-information corresponds to the media stream of one bit rate, and each piece of media description meta-information includes a length of a group of pictures and attribute information of the media stream with the bit rate corresponding to the media description meta-information.

FIG. 4 is a flowchart of a method for transmitting a media stream according to an exemplary embodiment. The method is applied to a server and includes the following steps:

In S41, a frame acquisition request is received, wherein the frame acquisition request carries target address information of a media stream with a target bit rate and a starting position of to-be-acquired media frames corresponding to the target bit rate in the media stream.

In S42, the media frames starting from the starting position are acquired from an address corresponding to the target address information in response to the frame acquisition request.

In S43, the media frames starting from the starting position are transmitted to a terminal at the target bit rate.

In some embodiments, the step of acquiring, from the address corresponding to the target address information, the media frames starting from the starting position includes: determining a target timestamp based on the starting position; and determining and acquiring, based on the target timestamp, the media frames starting from the starting position.

In some embodiments, in response to the starting position being a pulling position parameter, and the step of determining the target timestamp based on the starting position includes: determining the target timestamp based on an audio parameter and the pulling position parameter.

In some embodiments, the step of determining the target timestamp based on the audio parameter and the pulling position parameter includes: determining a value obtained by subtracting an absolute value of the default value of the pulling position parameter from a maximum timestamp as the target timestamp in response to the pulling position parameter being a default value and the audio parameter being a default value or the audio parameter being false; or determining a value obtained by subtracting an absolute value of the default value of the pulling position parameter from a maximum audio timestamp as the target timestamp in response to the pulling position parameter being a default value and the audio parameter being true; or determining a maximum timestamp as the target timestamp in response to the pulling position parameter being equal to 0 and the audio parameter being a default value or the audio parameter being false; or determining a maximum audio timestamp as the target timestamp in response to the pulling position parameter being equal to 0 and the audio parameter being true; or determining a value obtained by subtracting an absolute value of the pulling position parameter from a maximum timestamp as the target timestamp in response to the pulling position parameter being less than 0 and the audio parameter being a default value or the audio parameter being false; or determining a value obtained by subtracting an absolute value of the pulling position parameter from a maximum audio timestamp as the target timestamp in response to the pulling position parameter being less than 0 and the audio parameter being true; or determining a maximum timestamp as the target timestamp when a timestamp fallback occurs in a cache in response to the pulling position parameter being greater than 0 and the audio parameter being a default value or the audio parameter being false; or determining a maximum audio timestamp as the target timestamp when a timestamp fallback occurs in a cache in response to the pulling position parameter being greater than 0 and the audio parameter being true; or determining the pulling position parameter as the target timestamp in response to the pulling position parameter being greater than 0 and no timestamp fallback occurring in a cache.

In some embodiments, the method further includes: determining that the timestamp fallback occurs in the cache in response to timestamps of media frames in a media frame sequence in the cache increasing non-monotonically; or determining that no timestamp fallback occurs in the cache in response to timestamps of the media frames in a media frame sequence in the cache not increasing non-monotonically, wherein the media frame sequence is a sequence formed by a plurality of media frames cached in the cache.

In some embodiments, the method further includes: determining the media frame sequence increases non-monotonically in response to the cache including a video resource and timestamps of keyframes in the keyframe sequence increasing non-monotonically, wherein the keyframe sequence is a sequence formed by a plurality of cached keyframes; or determining that a media frame sequence increases non-monotonically in response to the cache not including a video resource and timestamps of audio frames in the audio frame sequence increasing non-monotonically, wherein the audio frame sequence is a sequence formed by a plurality of cached audio frames.

In some embodiments, the step of determining and acquiring, based on the target timestamp, the media frames starting from the starting position includes: determining a target media frame as a media frame starting from the starting position in response to the target media frame being present in a currently valid cache, wherein a timestamp of the target media frame is greater than or equal to the target timestamp and is closest to the target timestamp; or entering a waiting state in response to a target media frame being not present in a currently valid cache, and determining the target media frame as the media frame starting from the starting position in response to the target media frame being written into the currently valid cache, wherein a timestamp of the target media frame is greater than or equal to the target timestamp and is closest to the target timestamp; or sending pulling failure information in response to a target media frame being not present in a currently valid cache and a difference between the target timestamp and a maximum timestamp being greater than a timeout threshold, wherein a timestamp of the target media frame is greater than or equal to the target timestamp and is closest to the target timestamp.

The method embodiment provided in the embodiments of the present disclosure has been described from the perspective of the terminal and the perspective of the server. In the following, the embodiments of the present disclosure are illustrated through another method embodiment from the perspective of interaction between the terminal and the server.

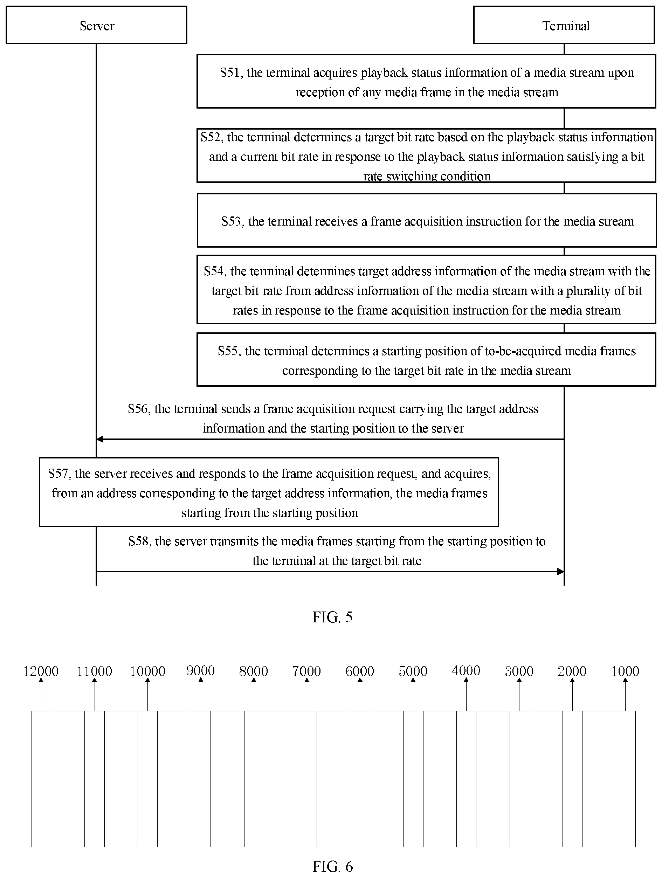

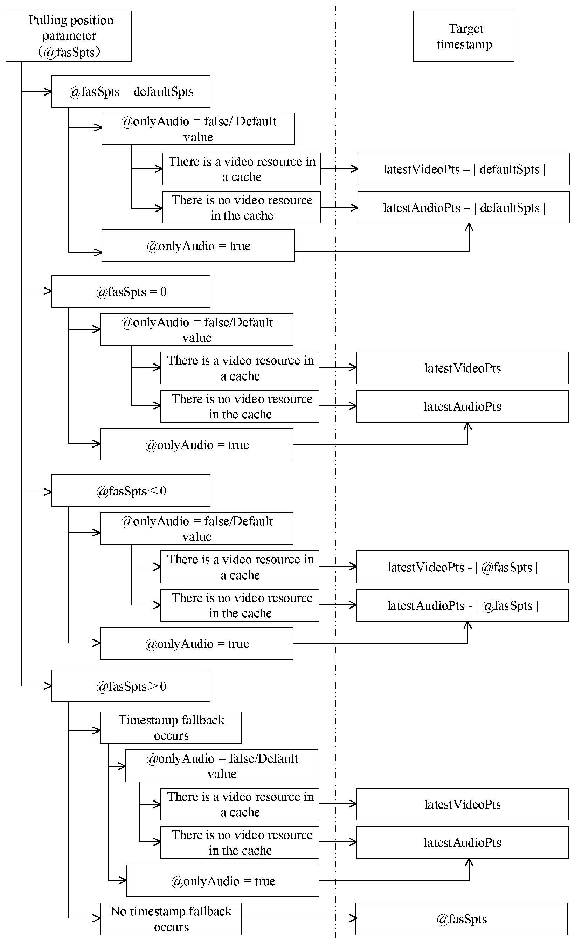

FIG. 5 is a flowchart of a method for transmitting a media stream according to an exemplary embodiment. Referring to FIG. 5, the method includes the following steps:

In S51, a terminal acquires playback status information of a media stream upon reception of any media frame in the media stream.

In the embodiments of the present disclosure, a method for transmitting a media stream is provided. The terminal receives a frame acquisition instruction, determines target address information of a media stream with a target bit rate and a starting position of to-be-acquired media frames in response to the frame acquisition instruction, and then sends a request to a server to instruct the server to send the corresponding media frames at the target bit rate, to implement frame-level transmission of the media stream.

The frame acquisition instruction is triggered in two manners. The two triggering manners correspond to different application scenarios. In the first triggering manner, the frame acquisition instruction is triggered when the playback status information of the media stream satisfies a bit rate switching condition. That is, upon determining that bit rate switching is necessary according to the playback status information of the media stream, the frame acquisition instruction is triggered, and a request is resent to the server, to request media frames with the target bit rate after switching. For content corresponding to the triggering manner, refer to S51 and S52.

In the second triggering manner, the frame acquisition instruction is triggered by a playback operation for the media stream. For example, the playback operation is the first playback operation performed by the user on the media stream, and is also an operation of restarting playback after a pause. The terminal provides a bit rate selection list to the user, and the user selects a bit rate from the bit rate selection list as the target bit rate. The user manually clicks on any value in the bit rate selection list, and correspondingly, the terminal determines a bit rate corresponding to the value as the target bit rate. The playback operation performed by the user on the media stream occurs when the terminal plays the media stream, and correspondingly, the user manually switches the transmission bit rate at any time in the process of using the terminal to acquire the media stream. Alternatively, the playback operation occurs before the terminal acquires the media stream for the first time. Correspondingly, before starting to use the terminal to acquire the media stream, the user first determines the target bit rate in the bit rate selection list provided by the terminal, and then the terminal responds to the correspondingly triggered frame acquisition instruction for the media stream. Alternatively, the target bit rate is a default value, which is not limited in the embodiments of the present disclosure.

The first triggering manner is described in detail below.

The terminal is connected to the server over a wired network or a wireless network. The server is configured to provide a media stream of a plurality of bit rates. The media stream includes a plurality of media frames. The media frame is an audio frame or an image frame. The plurality of media frames are obtained by sampling an original media resource. The terminal continuously acquires a plurality of media frames in the media stream and then plays the acquired media frames, to implement transmission and playback of the media stream. The terminal acquires the playback status information of the media stream when transmitting any media frame in the media stream. The playback status information is used for determining whether it is necessary to switch a transmission bit rate of the media stream.

An application is installed on the terminal. The application is used for browsing media streams. For example, the application includes at least one of the following: a short video application, a live streaming application, a video-on-demand application, a social application, a shopping application, etc. The embodiments of the present disclosure do not specifically limit the type of the application.

The media stream in the embodiments of the present disclosure includes, but is not limited to, at least one of the following: video resource, audio resource, image resource, or text resource, and the embodiments of the present disclosure do not specifically limit the type of the media stream. For example, the media stream is a live video stream of a network anchor, or a historical on-demand video pre-stored on a server, or a live audio stream of a radio anchor, or a historical on-demand audio pre-stored on a server.

In the foregoing process, a user starts the application on the terminal to display a resource push interface. For example, the resource push interface is a home page or a functional interface of the application. The embodiments of the present disclosure do not specifically limit the type of the resource push interface. The resource push interface includes thumbnail information of at least one media stream. The thumbnail information includes at least one of the following: a title, an introduction, a poster, a trailer, or a highlight clip of the media stream. In the process of browsing the resource push interface, the user clicks on the thumbnail information of a media stream of interest. In response to the user's touch operation on the thumbnail information of the media stream, the terminal is redirected from the resource push interface to a resource playback interface.

In S52, the terminal determines a target bit rate based on the playback status information and a current bit rate in response to the playback status information satisfying a bit rate switching condition.

The terminal acquires the playback status information of the media stream when playing the media stream. The playback status information is configured to determine whether the bit rate of the media stream needs to be switched. When the playback status information satisfies the bit rate switching condition, the terminal makes a response, determines a target bit rate that can optimize a playback effect of the media stream, and switches the bit rate to the target bit rate.

The bit rate is adjusted to be a bit rate corresponding to current network bandwidth information through the adaptation function. During the adaptive adjustment process, in addition to the current network bandwidth information, the playback status information of the terminal is also taken into consideration to dynamically select a target bit rate with an optimal playback effect, thereby achieving a compromise among a freeze rate, clarity and smoothness of media streaming.

In some embodiments, after determining the target bit rate, the terminal may acquire address information of the media stream corresponding to the target bit rate, that is, target address information. Correspondingly, the terminal triggers a frame acquisition instruction. The frame acquisition instruction is configured to instructing the terminal to determine, from address information of the media stream with a plurality of bit rates, the target address information of the media stream with the target bit rate, to provide a basis for the transmission of the media stream according to the target address information.

In some embodiments, the address information of the media stream with the plurality of bit rates is stored in media presentation description of the media stream, and correspondingly, the terminal determines the target address information of the media stream with the target bit rate from the address information of the media stream with the plurality of bit rates which is included in the media presentation description.

The determining process of the bit rate switching and the process of acquiring the target bit rate are described in detail below.

In some embodiments, the playback status information includes a first cache volume, and the first cache volume is a current cache volume of the media stream that has been cached but not played. The terminal determines the target bit rate based on the playback status information and a current bit rate in response to the first cache volume being greater than a first cache volume threshold or the first cache volume being less than a second cache volume threshold, wherein the second cache volume threshold is less than the first cache volume threshold.

After obtaining media frames of the media stream, the terminal caches the obtained media frames, and when the media frames need to be played, the terminal decodes the cached media frames and plays the media frames in chronological order. The first cache volume is measured by using the duration of the media stream that has been cached but not played. For example, if the terminal has cached 1000 milliseconds (ms) of the media stream and played 400 ms of the media stream, the first cache volume is 600 ms.

For the different bit rate switching conditions, the step of determining a target bit rate according to the playback status information and a current bit rate in response to the playback status information satisfying a bit rate switching condition includes the following two cases:

Case 1: In response to the first cache volume being greater than the first cache volume threshold, the terminal determines the target bit rate based on the playback status information and the current bit rate, wherein the target bit rate is greater than or equal to the current bit rate.

In Case 1, the first cache volume is greater than the first cache volume threshold, indicating that the terminal's current cache volume of the media stream that has been cached but not played can ensure smooth playback of the media stream, while a higher bit rate of the media stream makes the media stream clearer. Therefore, a downloading bit rate of the media stream is increased.

Case 2: In response to the first cache volume being less than the second cache volume threshold, the terminal determines the target bit rate based on the playback status information and the current bit rate, wherein the target bit rate is less than or equal to the current bit rate.

The second cache volume threshold is less than the first cache volume threshold. The first cache volume threshold and the second cache volume threshold are cache volume thresholds set in advance, or cache volume thresholds set temporarily.

In Case 2, when the first cache volume is less than the second cache volume threshold, it indicates that the terminal's current cache volume of the media stream that has been cached but not played cannot ensure smooth playback of the media stream. With a lower bit rate of the media stream, the terminal can cache a higher volume of the media stream within the same period of time, which increases the cache and also makes the playback of the media stream smoother. Therefore, the downloading bit rate of the media stream is reduced.

In addition to the relationships shown in the two cases above, the relationship between the first cache volume and the first cache volume threshold or the second cache volume threshold includes another possible case: the first cache volume is less than or equal to the first cache volume threshold and greater than or equal to the second cache volume threshold. In this case, it indicates that the terminal's current cache volume of the media stream that has been cached but not played just satisfies the playback requirement of the media stream, and the downloading bit rate of the media stream is not changed in this case.

For example, the first cache volume threshold is denoted by $q_h$, the second cache volume threshold is denoted by $q_l$, and the first cache volume is denoted by $q_c$. When $q_c > q_h$, the media stream is unlikely to freeze during playback, and in this case, the bit rate of the media stream is increased. When $q_c < q_h$, the media stream is likely to freeze during playback, and in this case, the bit rate of the media stream is reduced.

In some embodiments, by setting the two thresholds, the first cache volume is compared with the first cache volume threshold and the second cache volume threshold, to determine whether to switch the bit rate of the media stream accordingly, thereby quickly learning the current playback effect of the media stream. When the first cache volume is greater than the first cache volume threshold or less than the second cache volume threshold, the terminal performs the step of bit rate switching, and adjusts the bit rate adaptively to optimize the playback effect. However, after the bit rate switching, normal playback of the media stream cannot be necessarily ensured when the terminal receives the media stream at the target bit rate. Therefore, when the target bit rate is determined, the first cache volume is compared with the two thresholds, to determine whether the playback condition of the media stream will be improved after the bit rate switching.

In some embodiments, the process of determining the target bit rate includes: determining playback effects corresponding to a plurality of candidate bit rates, and then acquiring a candidate bit rate with an optimal playback effect from the plurality of candidate bit rates as the target bit rate. The terminal acquires a plurality of candidate bit rates, acquires a second cache volume corresponding to each candidate bit rate according to a relationship between the plurality of candidate bit rates and the current bit rate, the playback status information, and a position of any media frame of the media stream in a media frame group in which the any media frame is located, and determines the target bit rate from the plurality of candidate bit rates according to a relationship between the second cache volume corresponding to each candidate bit rate and the first cache volume threshold or the second cache volume threshold.

The server caches a media stream with a plurality of bit rates, and the plurality of candidate bit rates are the plurality of bit rates of the media stream that the server can provide. The media stream includes a plurality of media frame groups. The length of each media frame group is preset according service requirements, or set by a technician temporarily, which is not limited in the present disclosure. Each media frame group includes a plurality of media frames. The plurality of media frames are arranged in chronological order. The position of any media frame of the media stream in the media frame group in which the any media frame is located is denoted by duration it takes for the terminal to play from the first frame of the media frame group to the any media frame. The second cache volume corresponding to each candidate bit rate represents playback duration of the media stream that has been cached but not played at the end of transmission of the media frame group in which the any media frame is located, after the bit rate is switched to the candidate bit rate. By comparing the second cache volume corresponding to each candidate bit rate with the first cache volume threshold and the second cache volume threshold, the playback effect after the bit rate switching can be determined, thereby screening out a candidate bit rate that is used as the target bit rate.

For example, the server caches a media stream with n bit rates, and the plurality of candidate bit rates include $r_1, r_2, \ldots r_n$. The length of the media frame group in which the any media frame is located is $D$. Duration it takes to play from the first frame in the media frame group to the any media frame is $d$, and $d$ represents the position of the any media frame in the media frame group. In addition, $q_n$ represents the second cache volume corresponding to the $n^{th}$ candidate bit rate. $D$ and $d$ are positive numbers, and n is a positive integer.

A method for determining the target bit rate is provided by acquiring a plurality of candidate bit rates, acquiring a second cache volume corresponding to each candidate bit rate according to the relationship between plurality of candidate bit rates and the current bit rate, the playback status information and the position of any media frame of the media stream in the media frame group in which the any media frame is located, and then determining the target bit rate according to the relationship between the second cache volume corresponding to each bit rate and the first cache volume threshold or the second cache volume threshold, thus providing a basis for bit rate switching of the terminal.

In some embodiments, the process of acquiring the second cache volume is as follows: the terminal acquires a cache increment of the media stream at the end of transmission of the media frame group in which any media frame of the media stream is located according to the position of the any media frame of the media stream in the media frame group in which the any media frame is located; determines, according to a cache position corresponding to the relationship between the plurality of candidate bit rates and the current bit rate, a playback volume of the media stream from a current moment to the end of transmission of the media frame group in which the any media frame is located based on the plurality of candidate bit rates, wherein the cache position is a cache position for continuing to cache the media frame group in which the any media frame is located; and acquires the second cache volume corresponding to each candidate bit rate according to the first cache volume in the playback status information, the cache increment, and the playback volume, wherein the first cache volume is a current cache volume of the media stream that has been cached but not played.

The position of the any media frame in the media frame group in which the any media frame is located is denoted by duration it takes for the terminal to play from the first frame of the media frame group to the any media frame, for example, the duration is in the unit of ms. The playback duration of the media stream cached by the terminal within a period of time, which is from the moment of acquiring the any media frame to the end of transmission of the media frame group in which the any media frame is located, is the cache increment. It takes time for the terminal to acquire the media stream corresponding to the cache increment. While acquiring the media stream corresponding to the cache increment, the terminal is still playing the cached media stream, and within this period of time, the duration of the media stream played by the terminal is the playback volume. The terminal acquires the second cache volume corresponding to each candidate bit rate according to the first cache volume, the cache increment, and the playback volume. The second cache volumes corresponding to the plurality of candidate bit rates can represent the playback duration of the media stream that has been cached but not played at the end of transmission of the current media frame group, after the terminal switches the bit rate to the plurality of candidate bit rates.

For example, the second cache volume is expressed by the following formula:

$$q_n = q_c + D - d - q_b$$

wherein $q_c$ is the first cache volume, $q_b$ is the playback volume, $q_n$ is the second cache volume corresponding to the $n^{th}$ candidate bit rate. $D$ is the length of the media frame group in which the any media frame is located, $d$ is the duration it takes to play from the first frame in the media frame group to the any media frame, and correspondingly, *D-d* represents the cache increment.

A method for acquiring the second cache volume is provided by obtaining the second cache volume corresponding to each candidate bit rate by acquiring the cache increment and the playback volume and then combining them with the acquired first cache volume,, which provides a basis for subsequently determining the target bit rate according to the relationship between the second cache volume and the first cache volume threshold or the second cache volume threshold.

In some embodiments, during acquisition of the playback volume, current network status information is further used as a reference to determine the time it takes to finish caching the media frame group in which the any media frame is located and determine the cache volume that can be played within the period of time. The terminal determines a cache position for continuing to cache the media frame group in which the any media frame is located according to the relationship between the plurality of candidate bit rates and the current bit rate, acquires current network status information; according to the current network status information, the cache position, the length of the media frame group, and the plurality of candidate bit rates, the terminal determines the playback volume of the media stream in the process from the current moment to the end of transmission of the media frame group in which the any media frame is located based on the plurality of candidate bit rates.

The playback volume is the duration of the media stream that is played by the terminal in the period of time during which the terminal acquires the media stream corresponding to the cache increment. It can be learned that the playback volume is related to the speed at which the terminal acquires the media stream corresponding to the volume increment, that is, related to a network status of the terminal. Correspondingly, the terminal acquires current network information, which includes an average bandwidth of the terminal within a period of time close to the current moment. The cache position at which the terminal continues to cache the media frame group in which the any media frame is located is related to the relationship between the candidate bit rate and the current bit rate. When the candidate bit rate is the same as the current bit rate, the terminal does not need to switch the bit rate, and continues to cache, starting from a frame next to the any media frame, the media frame group in which the any media frame is located. When the candidate bit rate is different from the current bit rate, to prevent the terminal from generating an error when decoding the acquired media frame, the terminal caches, starting from the first frame of the media frame group in which the any media frame is located, the media frame group in which the any media frame is located. After determining the cache position from which the terminal continues to cache the media frame group in which the any media frame is located, the terminal can determine the playback volume in the process from the current moment to the end of transmission of the media frame group based on the plurality of candidate bit rates with reference to the acquired current network status information, the length of the media frame group, and the plurality of candidate bit rates.

For example, the second cache volume is expressed by the following formula:

When $r_n=r_c$, $q_n=q_c+D-d-(D-d)*r_c*8/B$.
When $r_n\neq r_c$, $q_n=q_c+D-d-D*r_n*8/B$.

wherein $r_c$ is the current bit rate, $r_n$ is an $n$th candidate bit rate, $q_n$ is a second cache volume corresponding to the $n$th candidate bit rate, $q_c$ is the first cache volume, $D$ is the length of the media frame group in which the any media frame is located, d is the duration it takes to play from the first frame of the media frame group to the any media frame, B is an average bandwidth of the terminal in a period of time close to the current moment, and *D-d* represents the cache increment. When the candidate bit rate is the same as the current bit rate, the terminal does not need to switch the bit rate, and continues to cache the media frame group in which the any media frame is located from a frame next to the any media frame. Correspondingly, $(D-d)*r_c*8/B$ represents the playback volume. When the candidate bit rate is different from the current bit rate, the terminal continues to cache the media frame group in which the any media frame is located from the first media frame of the media frame group in which the any media frame. Correspondingly, $D*r_n*8/B$ represents the playback volume.

For the average bandwidth, the average bandwidth $B$ of the terminal in a period of time close to the current moment is further obtained based on the following formula:

$$B=S*8/T$$

wherein S is a data amount of the media stream downloaded by the terminal in the period of time close to the current moment, and $T$ is the period of time close to the current moment; for example, $T$ is set to 500 ms.

A method for obtaining the playback volume is provided by determining a cache position for continuing to cache the media frame group in which the any media frame is located, acquiring current network status information is acquired, and determining the playback volume of the media stream in the process from the current moment to the end of transmission of the media frame group in which the any media frame is located based on the plurality of candidate bit rates according to the length of the media frame group and the plurality of candidate bit rates, such that the terminal can obtain the second cache volume.

In some embodiments, for Case 1 above, in response to at least one second cache volume in the second cache volumes corresponding to the plurality of candidate bit rates being greater than the first cache volume threshold, the terminal determines a maximum candidate bit rate in the at least one candidate bit rate corresponding to the at least one second cache volume as the target bit rate. The terminal also determines the current bit rate as the target bit rate in response to no second cache volume in the second cache volumes corresponding to the plurality of candidate bit rates being greater than the first cache volume threshold.

For Case 1 above, the first cache volume is greater than the first cache volume threshold, that is, the terminal's current cache volume of the media stream that has been cached but not played can ensure smooth playback of the media stream, and in this case, the downloading bit rate of the media stream is increased.

When at least one second cache volume in the second cache volumes corresponding to the plurality of candidate bit rates is greater than the first cache volume threshold, the at least one candidate bit rate corresponding to the at least one second cache volume can ensure normal playback of the media stream. Correspondingly, the terminal determines a maximum candidate bit rate in the at least one candidate bit rate corresponding to the at least one second cache volume as the target bit rate, and the candidate bit rate is greater than the current bit rate.

When no second cache volume in the second cache volumes corresponding to the plurality of candidate bit rates is greater than the first cache volume threshold, it indicates that among the plurality of candidate bit rates, no bit rate can ensure normal playback of the media stream while enhancing the clarity of the media stream. Therefore, the terminal determines the current bit rate as the target bit rate, and continues to cache the media stream at the current bit rate.

For example, the current bit rate is denoted by $r_c$, the target bit rate is denoted by $r$, the $n^{th}$ candidate bit rate is denoted by $r_n$, the second cache volume corresponding to the $n^{th}$ candidate bit rate is denoted by $q_n$, and the first cache volume threshold is denoted by $q_h$. If for any $r_n > r_c$, $q_n > q_h$ is invalid, then $r = r_c$. If for any $r_n > r_c$, $q_n > q_h$ can be valid, then a maximum $r_n$ value among all $r_n$ values that satisfy $q_n > q_h$ is used as the target bit rate.

The maximum candidate bit rate in the at least one candidate bit rate corresponding to the at least one second cache volume greater than the first cache volume threshold is determined as the target bit rate, or the current bit rate is determined as the target bit rate.

In some embodiments, for Case 1 above, when at least one second cache volume in the second cache volumes corresponding to the plurality of candidate bit rates is greater than the first cache volume threshold, the terminal determines a minimum candidate bit rate in the at least one candidate bit rate, which is greater than the current bit rate, corresponding to the at least one second cache volume as the target bit rate.

Each candidate bit rate in the at least one candidate bit rate, which is greater than the current bit rate, corresponding to the at least one second cache volume ensures normal playback of the media stream while enhancing the clarity of the media stream, and a minimum bit rate is selected as the target bit rate.

In some embodiments, for Case 2 above, in response to at least one second cache volume in the second cache volumes corresponding to the plurality of candidate bit rates being greater than the second cache volume threshold, the terminal determines a maximum candidate bit rate in the at least one candidate bit rate corresponding to the at least one second cache volume as the target bit rate. In response to no second cache volume in the second cache volumes corresponding to the plurality of candidate bit rates being greater than the second cache volume threshold, the terminal also determines a candidate bit rate corresponding to a maximum second cache volume in the second cache volumes corresponding to the plurality of candidate bit rates as the target bit rate.

For Case 2 above, the first cache volume is less than the second cache volume threshold, that is, the terminal's current cache volume of the media stream that has been cached but not played cannot ensure smooth playback of the media stream. In this case, the downloading bit rate of the media stream is reduced. When at least one second cache volume in the second cache volumes corresponding to the plurality of candidate bit rates is greater than the second cache volume threshold, the at least one candidate bit rate corresponding to the at least one second cache volume can ensure normal playback of the media stream. Correspondingly, the terminal determines a maximum candidate bit rate in the at least one candidate bit rate corresponding to the at least one second cache volume as the target bit rate. When no second cache volume in the second cache volumes corresponding to the plurality of candidate bit rates is greater than the second cache volume threshold, it indicates that among the plurality of candidate bit rates, no bit rate can ensure normal playback of the media stream. Therefore, the terminal determines a candidate bit rate corresponding to a maximum second cache volume in the second cache volumes corresponding to the plurality of candidate bit rates as the target bit rate.

For example, the current bit rate is denoted by $r_c$, the target bit rate is denoted by $r$, the $n^{th}$ candidate bit rate is denoted by $r_n$, the second cache volume corresponding to the $n^{th}$ candidate bit rate is denoted by $q_n$, and the second cache volume threshold is denoted by $q_l$. If for any $r_n$, $q_n \geq q_l$ is invalid, then $r_n$ corresponding to a maximum $q_n$ value is determined as the target bit rate. If for any $r_n$, $q_n \geq q_l$ can be valid, then a maximum $r_n$ value among all $r_n$ values that satisfy $q_n \geq q_l$ is used as the target bit rate.

The maximum candidate bit rate in the at least one candidate bit rate corresponding to the at least one second cache volume greater than the second cache volume threshold is determined as the target bit rate, or the candidate bit rate corresponding to the maximum second cache volume in the second cache volumes corresponding to the plurality of candidate bit rates is determined as the target bit rate.

It should be noted that, S52 is an optional step of the embodiments of the present disclosure. In some embodiments, the target bit rate is a preset bit rate, or is a bit rate indicated in a bit rate selecting instruction. For example, a user chooses to switch the bit rate and specifies the target bit rate. Correspondingly, the terminal performs step S53 below according to the target bit rate. The present disclosure does not limit the manner of acquiring the target bit rate.

In the above description, the playback status information including the first cache volume is taken as an example for description. In some other embodiments, the playback status information includes at least one of freeze information or a frame loss rate in a playback process of the media stream. Correspondingly, the playback status information satisfying the bit rate switching condition is either the freeze information or the frame loss rate satisfying the bit rate switching condition.

The freeze information includes at least one of the following: the number of freezes within a target time period for playing the media stream, a last freeze time or last freeze duration. Correspondingly, the bit rate switching condition includes a number of cases. For example, the number of freezes is greater than a freeze count threshold, duration between the last freeze time and a current moment is less than an interval threshold and the freeze duration is greater than a duration threshold, or the last freeze duration is greater than the duration threshold, and the like. In such cases, the terminal reduces the bit rate. Definitely, the bit rate switching condition also includes the following cases: the number of freezes is less than the freeze count threshold, the duration between the last freeze time and the current moment is greater than the interval threshold and the freeze duration is less than the duration threshold, or the last freeze duration is less than the duration threshold. In such cases, the terminal increases the bit rate.

For the frame loss rate, correspondingly, the bit rate switching condition is that the frame loss rate is greater than a first frame loss rate threshold, or the bit rate switching condition is that the frame loss rate is less than a second frame loss rate threshold, wherein the second frame loss rate threshold is less than the first frame loss rate threshold. In some embodiments, the frame loss rate is alternatively a frame loss rate within a target time period, for example, a frame loss rate within last minute. The transmission condition of the media stream in a period of time is determined based on the frame loss rate within the period of time, thereby determining whether the bit rate needs to be adjusted.

Based on the freeze information or the frame loss rate included in the playback status information, a method for determining whether the bit rate switching condition is satisfied according to the freeze information or the frame loss rate is provided, such that the terminal can switch the bit rate of the media stream according to more determining conditions.

It should be noted that, step S52 in which the terminal determines the target bit rate based on the playback status information and the current bit rate is an optional step of the embodiments of the present disclosure In some embodiments, the target bit rate is a preset bit rate. Correspondingly, when the playback status information satisfies the bit rate switching condition, the terminal directly determines the preset bit rate as the target bit rate, thereby triggering the frame acquisition instruction, to perform S53 below. The present disclosure does not limit the method for determining the target bit rate.

In S53, the terminal receives a frame acquisition instruction for the media stream.

As can be learned from the content above, the frame acquisition instruction is triggered in two manners. In the first triggering manner, the frame acquisition instruction is triggered when the playback status information satisfies the bit rate switching condition; in the second triggering manner, the frame acquisition instruction is triggered by a playback operation on the media stream.

In the two cases described above, the target bit rate is determined in different manners. In the first triggering manner, as the bit rate switching condition is satisfied, the target bit rate is the determined bit rate to be switched. In some embodiments, the target bit rate may have different relationships with the current bit rate. For example, the target bit rate is different from the current bit rate, that is, it is determined to switch the bit rate through the determining process above, and in this case, the terminal triggers the frame acquisition instruction and performs the subsequent request sending step. In another example, the target bit rate is the same as the current bit rate, that is, it is determined not to switch the bit rate through the determining process above, and in this case, the terminal continues to receive the media frames of the media stream from the server at the current bit rate. Correspondingly, the terminal does not trigger the frame acquisition instruction; alternatively, the frame acquisition instruction is triggered, and after receiving the frame acquisition instruction, the terminal discards the frame acquisition instruction without making any response. Certainly, the terminal does not need to perform the subsequent request sending step.

In the second triggering manner, during playback of the media stream, the target bit rate is a bit rate selected by the user or is a default bit rate, which is not limited in the embodiments of the present disclosure.

In S54, the terminal determines target address information of the media stream with the target bit rate from address information of the media stream with a plurality of bit rates in response to the frame acquisition instruction for the media stream, wherein the address information of the media stream with the plurality of bit rates is included in a media presentation description of the media stream.

In S54, the terminal determines the target address information of the media stream with the target bit rate from the address information of the media stream with the plurality of bit rates in response to the frame acquisition instruction for the media stream. The address information of the media stream with the plurality of bit rates being stored in a media presentation description is used as an example for description. Alternatively, the address information of the media stream with the plurality of bit rates may be stored in other places, and the terminal may acquire the address information of the media stream with the plurality of bit rates from other places, thereby determining the address information of the media stream with the target bit rate.

After the server transcodes the media stream, the media stream with a plurality of bit rates may be formed. In this case, the server allocates different address information to the media stream with different bit rate, and the address information of the media stream with different bit rates is all recorded in the media presentation description. The terminal downloads the media presentation description of the media stream from the server, and determines the address information of the media stream with different bit rates based on the media presentation description. After determining the target bit rate, the terminal queries the media presentation description by using the target bit rate as an index, to obtain media description meta-information corresponding to the media stream with the target bit rate, and extracts the target address information from the attribute information of the media description meta-information.

The media presentation description is a data file provided by the server to the terminal based on service requirements. The server pre-configures, based on the service requirements, a set of data and service-related description for providing a media streaming service to the terminal, to ensure that the terminal can acquire necessary information required for resource downloading, decoding, and playback and rendering. The media presentation description includes an encoded media stream that can be transmitted and corresponding meta-information description, such that the terminal can construct a frame acquisition request (FAS request) based on the media presentation description. Then, the server responds to the frame acquisition request according to processing specifications of the FAS standard, and provides the media streaming service to the server.

In some embodiments, the media presentation description is a file in the format of javaScript object notation (JSON) or a file in another format. The embodiments of the present disclosure do not specifically limit the format of the media presentation description. The media presentation description includes a version number (@version) and a media description set (@adaptationSet), which are described in detail below:

In some embodiments, the media presentation description itself may generate different versions due to changes in the transcoding mode, and the FAS standard will also change versions with the development of the technology. Therefore, the version number may include at least one of a version number of the media presentation description or a version number of a resource transmission standard (FAS standard). For example, the version number only includes the version number of the FAS standard, or only includes the version number of the media presentation description, or the version number is a combination of the version number of the media presentation description and the version number of the FAS standard.

In some embodiments, the media description set is configured to represent meta-information about the media stream. The media description set includes multiple pieces of media description meta-information. Each piece of media description meta-information corresponds to a media stream at one bit rate, and includes a length of a group of pictures (GOP) (@gopDuration) and attribute information (@representation) of the media stream at the bit rate corresponding to the media description meta-information.

The GOP length herein is a distance between two keyframes. A keyframe is an intra-coded picture (also known as "I-frame") in a video coding sequence. The coding and decoding of the I-frame do not need to refer to other image frames and can be implemented using only information of the I-frame itself. In contrast, the coding and decoding of a predictive-coded picture (P-frame) and a bidirectionally predicted picture (B-frame) need to refer to other image frames, and cannot be implemented using only information of the frame itself. That is, the media frame group in which the media frame in S52 is located may include an audio stream only, or may include an audio stream and a video stream. If the media stream includes only a video stream, the media frame group is a group of pictures; if the media stream includes only an audio frame, the media frame group is a group of audio frames.

In some embodiments, for the attribute information in each piece of media description meta-information (i.e., each piece of attribute information), each piece of attribute information includes identification information of the media stream, an encoding mode of the media stream, a bit rate supported by the media stream, and address information of the media stream at the bit rate.

Identification information (@id): a unique identifier of each media stream, wherein the identification information is allocated by the server.

Encoding mode (@codec): a codec standard to be followed by the media stream e.g., H.263, H.264, H.265, or MPEG.

Bit rate supported by the media stream (@bitrate): data bits transmitted per unit time during resource transmission. Taking an audio resource as an example, a higher bit rate indicates a lower compression ratio of the audio resource; with a smaller loss of sound quality, the compressed audio resource is closer to the sound quality of the audio source (better sound quality). This also applies to a video resource. However, since the video resource is formed by an image resource and an audio resource, the corresponding image resource should be taken into consideration in addition to the audio resource during calculation of the bit rate.

Address information of the media stream at a certain bit rate (@url): after transcoding the media stream to obtain the media stream at the bit rate, the server provides a uniform resource locator (URL) or a domain name of the media stream at the bit rate to the external.

In some embodiments, each piece of attribute information further includes at least one of the following: a quality type of the media stream, a hidden option of the media stream, a first adaptation function option, or a default playback function option.

Quality type (@qualityType): including a resolution, a frame rate or other quality evaluation indicators of the media stream.

Hidden option of the media stream (@hiden): for indicating whether the media stream is presented, wherein if the hidden option is set to true, the media stream at the corresponding bit rate is not presented; in this case, the media stream at the corresponding bit rate cannot be selected by the user manually but can only be selected through an adaptation function; if the hidden option is set to false, the media stream at the corresponding bit rate is presented; in this case, in addition to being selected through the adaptation function, the media stream at the corresponding bit rate can also be selected by the user manually. It should be noted that, the adaptation function in the present disclosure means a function of dynamically adjusting a frame rate of a played media stream based on a current bandwidth condition by a terminal. Details are not described herein again.

First adaptation function option (@enableAdaptive): for indicating whether the media stream is visible relative to an adaptation function, wherein in response to the first adaptation function option being set to true, the media stream at the corresponding bit rate is visible relative to the adaptation function, and the media stream at the corresponding bit rate can be selected by the adaptation function; in response to the first adaptation function option being set to false, the media stream at the corresponding bit rate is invisible relative to the adaptation function, and the media stream at the corresponding bit rate cannot be selected by the adaptation function.

Default playback function option (@defaultSelect): for indicating whether the media stream at the corresponding bit rate is played by default at the start-up of the playback, wherein in response to the default playback function option being set to true, the media stream at the corresponding bit rate is played by default at the start-up of the playback; in response to the default playback function option being set to false, the media stream at the corresponding bit rate is not played by default at the start-up of the playback. Since a media playback component cannot play a media stream at two bit rates by default (there is a playback conflict), in the attribute information of all the media description meta-information, the default playback function option (@defaultSelect) is allowed to be set to true for the media stream at a unique bit rate.

In some embodiments, in addition to the version number and the media description set, the media presentation description further includes at least one of the following: a service type, a second adaptation function option, or a third adaptation function option.

Service type (@type): for specifying a service type of the media stream, including at least one of live streaming or video on demand. For example, when the service type is set to "dynamic", it indicates live streaming, and when the service type is set to "static", it indicates video on demand. Without particular specification, "dynamic" is used as a default value.

Second adaptation function option (@hideAuto): for indicating whether to enable the adaptation function, wherein in response to the second adaptation function option being set to true, the adaptation function is disabled and an adaptation option is not displayed; in response to the second adaptation function option being set to false, the adaptation function is enabled and the adaptation option is displayed. Without particular specification, "false" is used as a default value.

Third adaptation function option (@autoDefaultSelect): for indicating whether the adaptation function is enabled by default at the start-up of the playback, wherein in response to the third adaptation function option being set to true, playback is based on the adaptation function by default at the beginning of the playback (start-up of the playback); in response to the third adaptation function option being set to false, playback is not based on the adaptation function by default at the beginning of the playback, that is, the adaptation function is disabled by default at the start-up of the playback. It should be noted that, the third adaptation function option herein is the premise of the foregoing default playback function option, that is, the default playback function option takes effect only when the third adaptation function option is set to false (the adaptation function is disabled by default at the start-up of the playback). In this case, the media stream corresponding to the bit rate for which @defaultSelect is set to true is played by default at the start-up of the playback. In response to the third adaptation function option being set to true, the media stream with a bit rate most suitable for the current network bandwidth condition will be selected according to the adaptation function at the start-up of the playback.

In S55, the terminal determines a starting position of to-be-acquired media frames corresponding to the target bit rate in the media stream.

In the two triggering manners corresponding to the frame acquisition instruction, the target bit rate may correspond to different to-be-acquired media frames, and thus the to-be-acquired media frames may start at different positions in the media stream.

In the case where the frame acquisition instruction is triggered when the playback status information of the media stream satisfies the bit rate switching condition in the first triggering manner, the terminal determines the target bit rate that optimizes the playback effect of the media stream. Since the target bit rate may be different from the current bit rate, according to a reference relationship used by the terminal when decoding media frames, a position from which the terminal starts downloading media frames in the media stream corresponding to the target bit rate after bit rate switching may be different from the position of the any media frame in the media stream corresponding to the current bit rate. The starting position of the to-be-acquired media frames corresponding to the target bit rate in the media stream is the position from which the terminal starts downloading the media frames in the media stream after the bit rate is switched to the target bit rate.

In some embodiments, the terminal can determine the starting position of the to-be-acquired media frames corresponding to the target bit rate in the media stream according to the position of the any media frame in the media stream. The terminal can discard the playback status information in response to the target bit rate being equal to the current bit rate, without determining the target position. The terminal alternatively determines a position of the first media frame in the media frame group in which the any media frame is located as the target position in response to the target bit rate being not equal to the current bit rate.

If the target bit rate is the same as the current bit rate, the bit rate at which the terminal transmits the media stream does not change. Therefore, the terminal continues to transmit media frames starting from a media frame next to the any media frame based on the current bit rate. Correspondingly, the terminal discards the acquired playback status information. During transcoding of the media stream, key media frames in the media stream are strictly aligned. That is, in the media stream with different bit rates, the first media frames in corresponding media frame groups are at the same position. If the target bit rate is different from the current bit rate, the bit rate has changed. It is necessary to keep the bit rate of the media frame group in which the any media frame is located consistent. Therefore, media frames of the media frame group are retransmitted based on the target bit rate. The terminal starts transmitting the media frames at the target bit rate from the position of the first media frame in the media frame group in which the any media frame is located.

For example, as shown in FIG. 6, the media stream currently transmitted by the terminal includes two media frame groups. Each media frame group includes a plurality of media frames, and each media frame corresponds to one timestamp. The media frames in the first media frame group are arranged based on the timestamps: [1000, 2000, 3000, 4000, 5000, 6000], and the media frames in the second media frame group are arranged based on the timestamps: [7000, 8000, 9000, 10000, 11000, 12000]. For example, the terminal is currently receiving the media frame with the timestamp 8000 in the second media frame group. If the target bit rate determined by the terminal after receiving the media frame with the timestamp 8000 is the same as the current bit rate, the terminal does not need to switch the bit rate or send a frame acquisition request to the server, and continues to receive media frames starting from the media frame with the timestamp 9000. If the target bit rate determined by the terminal after receiving the media frame with the timestamp 8000 is different from the current bit rate, the terminal switches the bit rate and sends a frame acquisition request to the server. Moreover, to keep the bit rate of the media frame group consistent, the terminal re-acquires the media frames in the media frame group starting from the media frame with the timestamp 7000. In the foregoing process, the starting position of the to-be-acquired media frames corresponding to the target bit rate in the media stream is re-determined according to the position of the any media frame in media stream.

It should be noted that, the terminal starts transmitting the media frames at the target bit rate from the position of the first media frame in the media frame group in which the any media frame is located. Correspondingly, there may be media streams with different bit rates in the terminal. When playing the media stream, the terminal preferentially plays a media stream with a high bit rate.

In the case where the frame acquisition instruction is triggered by the playback operation on the media stream, the to-be-acquired media frames corresponding to the target bit rate may have multiple cases. Three possible cases are provided below.

Case 1: the terminal determines a position of a media frame, which is generated at an operation time of the playback operation, in the media stream as the starting position.

In a live streaming scenario, if a user wants to watch a live stream of an anchor, the user performs a playback operation on the media stream. For example, the user clicks on a link of a live streaming room of the anchor, to enter the live streaming room of the anchor. A position of a media frame being generated by the terminal currently in the live stream is used as the starting position.

Case 2: the terminal determines a position of a media frame, which is selected by the frame acquisition instruction, in the media stream as the starting position.

For example, in a video-on-demand scenario, if the user wants to watch the video from the 15th second of the video, the user performs a playback operation on the video and controls the media stream to be played starting from the 15th second. In this case, the terminal uses a position of a media frame corresponding to the 15th second in the video as the starting position.

Case 3: the terminal determines a position of a first media frame in the media stream as the starting position.

For example, in a video-on-demand scenario, if the user wants to watch a certain video, the user performs a playback operation on the video. The terminal determines a position of the first media frame of the video as the starting position.

The playback operation occurs before the terminal acquires the media stream for the first time, or occurs when the terminal plays the media stream. According to an operation time of the playback operation, the terminal determines a position of a media frame corresponding to the operation time as the starting position, ensuring that the user obtains the media stream after the operation time. Of course, since the media presentation description may change and cause version changes, the terminal downloads the media presentation description again every time the user clicks on the playback option, and uses the position of the first media frame of the media stream as the starting position. The terminal further determines a position of a media frame, which is selected by the frame acquisition instruction, in the media stream as the starting position, which is not limited in the embodiments of the present disclosure.

In S56, the terminal sends a frame acquisition request carrying the target address information and the starting position to a server, wherein the frame acquisition request is configured to instruct the server to return, at the target bit rate, media frames starting from the starting position in the media stream.

After acquiring the target address information and the starting position, the terminal generates a frame acquisition request carrying the target address information and the starting position, and then sends the frame acquisition request (or known as a FAS request) carrying the target address information to the server.

In some embodiments, in addition to the target address information (@url), the frame acquisition request further includes an extended parameter (@extParam). The extended parameter is used for specifying different requesting manners, to implement different functions. The extended parameter includes at least one of a first extended parameter or a second extended parameter, which will be described in detail below:

The first extended parameter (@onlyAudio) is an audio parameter for indicating whether the media frames are audio frames. In response to the first extended parameter being set to true, it means that the media frames pulled by the terminal are audio frames, i.e., the terminal only pulls a pure audio stream. In response to the first extended parameter being set to false, it means that the media frames pulled by the terminal are audio and video frames, i.e., the terminal pulls both audio and video streams. Without particular specification, "false" is used as a default value.

In an exemplary scenario, the terminal acquires the type of the media stream. If the type of the media stream is video, the first extended parameter is set to "false" or a default value. If the type of the media stream is audio, the first extended parameter is set to "true".

In some embodiments, the terminal further detects the type of the application. If the type of the application is video application, the first extended parameter is set to "false" or a default value. If the type of the application is audio application, the first extended parameter is set to "true".

The second extended parameter (@fasSpts) is a pulling position parameter for indicating that transmission of the media frames of the media stream starts at a target timestamp indicated by the second extended parameter. In some embodiments, a data type of the second extended parameter is int64 _t, or other data types. The embodiments of the present disclosure do not specifically limit the data type of the second extended parameter. The second extended parameter is specified in the frame acquisition request. In response to the second extended parameter being not specified in the frame acquisition request, the server configures a default value of the second extended parameter.

For different values of the second extended parameter, media frame situations corresponding to different values are described below:

1) In response to the second extended parameter being greater than zero (@fasSpts>0), the target timestamp pts is greater than a current moment; in this case, the terminal starts pulling the media stream from a media frame with pts being equal to @fasSpts (a future moment).

2) In response to the second extended parameter being equal to zero (@fasSpts=0), the target timestamp pts is a timestamp of a keyframe or an audio frame closest to the current moment. When pulling audio frames (pure audio mode), the terminal starts pulling the media stream from the latest audio frame, or when pulling audio and video frames (non-pure audio mode), the terminal starts pulling the media stream from the latest I-frame of the video.

3) In response to the second extended parameter being less than zero (@fasSpts<0), the target timestamp is less than the current moment, and the media frames include media frames already cached starting from the target timestamp. That is, the terminal pulls the media stream with a cache length of |@fasSpts| milliseconds.

In some embodiments, the terminal determines the second extended parameter based on the service type (@type) field in the multimedia presentation description. If the service type obtained through query is "dynamic" (live streaming) and the user has not specified a playback progress, the terminal sets the second extended parameter to 0, such that the user can watch the latest live video stream in real-time. If the service type obtained through query is "dynamic" (live streaming) and the user has specified the playback progress, the terminal sets the second extended parameter to a timestamp (target timestamp) corresponding to the playback progress, so as to conveniently start pulling the media stream from the starting position specified by the user. If the service type obtained through query is "static" (video on demand) and the user has not specified the playback progress, the terminal detects a historical playback progress of the media stream when it was last closed and sets the second extended parameter to a timestamp (target timestamp) corresponding to the historical playback progress, such that the user can continue to watch the media stream from the last playback progress. It should be noted that if the user watches the media stream for the first time and does not find any historical playback progress, the terminal sets the second extended parameter to a timestamp of the first media frame (target timestamp); if the service type obtained through query is "static" (video on demand) and the user has specified the playback progress, the terminal sets the second extended parameter to a timestamp corresponding to the playback progress, so as to conveniently start pulling the media stream from the starting position specified by the user.

The format of the frame acquisition request is considered to be the url address of the media stream at the target bit rate plus an extended field, which is expressed figuratively as "url&extParam". In the FAS standard, after receiving the frame acquisition request, the server can respond to the frame acquisition request according to the processing specifications specified in the FAS, referring to S57 below.

In S57, the server receives and responds to the frame acquisition request, and acquires, from an address corresponding to the target address information, the media frames starting from the starting position.

In the above process, after receiving the frame acquisition request, the server parses the frame acquisition request to obtain the target address information and the starting position. Based on the target address information and the starting position, the server locates, in a resource library, a media frame corresponding to the starting position in the media stream at the target bit rate, and acquires media frames starting from the located media frame.

In some embodiments, the server determines a target timestamp based on the starting position, and then determines and acquires, based on the target timestamp, the media frames starting from the starting position. Each media frame in the media stream corresponds to one timestamp. The server locates, based on the starting position, a media frame at the starting position, then determines the target timestamp according to the timestamp of the media frame, and further locates, based on the target timestamp, a media frame from which the transmission begins. Therefore, the server can transmit the media stream to the terminal starting from the located media frame.

In some embodiments, the starting position is a pulling position parameter, and the foregoing process of determining the target timestamp is as follows: the server determines the target timestamp based on an audio parameter and the pulling position parameter.

In some embodiments, the pulling position parameter (@fasSpts) is used for indicating a specific frame from which the server starts transmitting the media stream. A data type of the pulling position parameter is int64_t or other data types. The embodiments of the present disclosure do not specifically limit the data type of the pulling position parameter. In the frame acquisition request, the pulling position parameter is equal to 0, greater than 0, or less than 0, or is a default value. Different values correspond to different processing logic of the server, which will be detailed in S57 below.

In some embodiments, in response to the frame acquisition request carrying the pulling position parameter, the server parses the frame acquisition request to obtain the pulling position parameter. In this case, the terminal has specified the pulling position parameter in the frame acquisition request, and the server directly parses the @fasSpts field in the frame acquisition request to obtain the pulling position parameter.

In some embodiments, in response to the pulling position parameter being default in the frame acquisition request, the server configures the pulling position parameter to be a default value. In this case, the terminal does not specify the pulling position parameter in the frame acquisition request, and the server configures a default value for the pulling position parameter and sets @fasSpts = defaultSpts. The default value herein is configured by the server according to service scenarios. For example, in a scenario of live streaming service, defaultSpts is set to 0, and in a scenario of video-on-demand service, defaultSpts is set to a presentation time stamp (PTS) of a historical media frame at the end of last watch. If the PTS of the historical media frame is not recorded in the cache, defaultSpts is set to a PTS of the first media frame.

The audio parameter (@onlyAudio) is configured to indicate a pulling mode of the media stream. If the audio parameter is set to true, it means that the media frames transmitted by the server to the terminal are audio frames, which is known as a "pure audio mode". If the audio parameter is set to false, it means that the media frames transmitted by the server to the terminal are audio and video frames, which is known as a "non-pure audio mode". In the frame acquisition request, the audio parameter is true, false, or default, and different values correspond to different processing logic of the server, which will be detailed in S57 below.

In some embodiments, in response to the frame acquisition request carrying the audio parameter, the server parses the frame acquisition request to obtain the audio parameter. In this case, the terminal has specified the audio parameter in the frame acquisition request, and the server directly parses the @onlyAudio field in the frame acquisition request, to obtain the audio parameter.

In some embodiments, in response to the audio parameter being default in the frame acquisition request, the server sets the audio parameter to a default value. In this case, the terminal does not specify the audio parameter in the frame acquisition request, and the server configures a default value for the audio parameter. The default value herein is configured by the server according to service scenarios. For example, when a video service is provided, the default value is set to false, that is, @onlyAudio = false; alternatively, when only an audio service is provided, the default value is set to true, that is, @onlyAudio = true. It should be noted that, in the embodiments of the present disclosure, the default value being false is used as an example for description. Depending on different default values, the processing logic of the server is adjusted adaptively, which is not described in detail hereinafter.

In some embodiments, before the target timestamp is determined, the server refreshes a currently valid cache by performing S57A-S57B below.

In S57A, the server determines that a timestamp fallback occurs in the cache in response to timestamps of media frames in a media frame sequence in the cache increasing non-monotonically. In response to the media frame sequence in the cache increasing monotonically, the server determines that no timestamp fallback occurs in the cache.

The media frame sequence is a sequence formed by a plurality of media frames in the cache. The timestamp fallback phenomenon described above refers to the fact that the media frames in the cache are not stored in the order of monotonically increasing timestamps, and there are redundant media frames in the cache. Such a phenomenon easily occurs in the scenario of live streaming service. When an anchor terminal pushes a stream to a server, media frames sent first may arrive at the server later due to network fluctuations, delays, and other reasons, resulting in non-monotonically increasing timestamps of the media frames in the media frame sequence in the cache and triggering a timestamp fallback phenomenon. In addition, in order to avoid packet loss, the anchor terminal usually sends each media frame multiple times. Such a redundant multi-transmission mechanism also causes the timestamps of media frames in the media frame sequence in the cache to be non-monotonically increasing, triggering the timestamp fallback phenomenon.

To determine whether the timestamps of the media frames in the media frame sequence are non-monotonically increasing, the server simply performs traversing from a media frame with the smallest timestamp according to an arrangement order of the media frame sequence in the cache to determine whether there are media frames with timestamps greater than the timestamp of the next media frame, and if there is any media frame with the timestamp greater than the timestamp of the next media frame, the server determines that the timestamps of the media frames in the media frame sequence are non-monotonically increasing, and determines that a timestamp fallback occurs in the cache. If the timestamps of all media frames are less than or equal to the timestamp of the next media frame, it is determined that the timestamps of the media frames in the media frame sequence are monotonically increasing, and it is determined that no timestamp fallback occurs in the cache.

For example, it is assumed that the timestamps of the media frames in the media frame sequence in the cache are [1001, 1002, 1003, 1004, 1005...], and the timestamps of the omitted media frames are increasing. In this case, the timestamps of the media frames in the media frame sequence are monotonically increasing, and no timestamp fallback occurs in the cache. In another example, it is assumed that the timestamps of the media frames in the media frame sequence in the cache are [1001, 1002, 1003, 1001, 1002, 1003, 1004...], and the timestamps of the omitted media frames are increasing. In this case, the timestamps of the media frames in the media frame sequence are non-monotonically increasing because the timestamp of the third media frame ($PTS_3$ = 1003) is greater than the timestamp of the fourth media frame ($PTS_4$ = 1001), and a timestamp fallback occurs in the cache.

In some embodiments, the video resource and audio resource are discussed separately. For a video resource, to determine whether the timestamps of the media frames in the media frame sequence are non-monotonically increasing, it is merely considered whether timestamps of keyframes in a keyframe (I-frame) sequence of the video resource are non-monotonically increasing. For an audio resource, to determine whether the timestamps of the media frames in the media frame sequence are non-monotonically increasing, it is considered whether timestamps of audio frames in an audio frame sequence of the audio resource are non-monotonically increasing.

That is, it is determined that the media frame sequence is non-monotonically increasing if the cache includes a video resource and the timestamps of the keyframes in the keyframe sequence are non-monotonically increasing, wherein the keyframe sequence is a sequence formed by a plurality of keyframes already cached in the cache. It is determined that the media frame sequence is non-monotonically increasing if the cache does not include a video resource and the timestamps of the audio frames in the audio frame sequence are non-monotonically increasing, wherein the audio frame sequence is a sequence formed by a plurality of audio frames already cached in the cache.

The coding and decoding of the I-frame do not need to refer to other image frames and can be implemented using only information of the I-frame itself. In contrast, the coding and decoding of a predictive-coded picture (P-frame) and a bidirectionally predicted picture (B-frame) need to refer to other image frames, and cannot be implemented using only information of the frame itself. For a video resource, P-frames and B-frames are decoded based on I-frames after the I-frames are decoded. Therefore, even if the timestamps of the P-frames and B-frames corresponding to the I-frames are non-monotonically increasing, as long as the timestamps of the I-frames in the I-frame sequence (only the PTS sequence of the I-frames is considered) are monotonically increasing, it is assumed that no timestamp fallback occurs in the cache, and conversely, once the timestamps of the I-frames in the I-frame sequence are non-monotonically increasing, it is determined that a timestamp fallback occurs in the cache. Of course, if there is no video resource in the cache, a PTS sequence of all the audio frames is directly traversed, which is not described in detail again herein.

In some embodiments, since the timestamp fallback may occur more than once, i.e., the timestamps of the media frames in the media frame sequence are divided into multiple monotonically increasing phases, and the timestamps of media frames within each phase are monotonically increasing, but the timestamps of media frames in different phases are non-monotonically increasing. In this case, there are many redundant invalid media frames in the cache, and the server determines a currently valid cache in the cache by performing S57B below.

In S57B, the server determines each media frame in a last monotonically increasing phase as a resource in a currently valid cache.

In the above process, the server determines the first media frame in the last monotonically increasing phase from the media frame sequence, and determines all media frames between the first media frame mentioned above and a media frame with a maximum timestamp (equivalent to the latest media frame) in the media frame sequence as the currently valid cache, thereby ensuring that the timestamps of the media frames in the currently valid cache are monotonically increasing.

For example, it is assumed that the timestamps of the media frames in the media frames sequence in the cache are [1001, 1002, 1003, 1001, 1002, 1003, 1004...], and the timestamps of the omitted media frames are increasing. In this case, a timestamp fallback occurs in the cache, and the first media frame in the last monotonically increasing phase is the fourth media frame. Then, all media frames between the fourth media frame and the latest media frame are determined as the currently valid cache. For another example, it is assumed that the timestamps of the media frames in the media frame sequence in the cache are [1001, 1002, 1003, 1001, 1002, 1003, 1001...], and the timestamps of the omitted media frames are increasing. In this case, a timestamp fallback occurs in the cache. The first media frame in the last monotonically increasing phase is the seventh media frame, and all media frames between the seventh media frame and the latest media frame are determined as the currently valid cache.

In some embodiments, the video resource and the audio resource are discussed separately. In response to the cache including a video resource, for the video resource, the server uses I-frames of the video resource as calculation points, and all media frames between the first keyframe in the last monotonically increasing phase and the latest video frame as the currently valid cache, wherein the timestamp of the latest video frame is denoted by latestVideoPts. In response to the cache not including a video resource, for an audio resource, the server uses audio frames as calculation points, and all media frames between the first audio frame in the last monotonically increasing phase and the latest audio frame as the currently valid cache, wherein the timestamp of the latest audio frame is denoted by latestAudioPts.

In some embodiments, the operation of updating the currently valid cache is triggered at regular intervals, or triggered manually by the technician. Certainly, the currently valid cache is updated once every time a frame acquisition request is received, which is called "passive triggering", and the triggering condition for updating the currently valid cache is not specifically limited in the embodiments of the present disclosure.

Through S57A-S57B above, the timestamp fallback in the cache can be detected in time, and the currently valid cache is updated based on the processing for the timestamp fallback to avoid anomalies in the subsequent transmission of media frames.

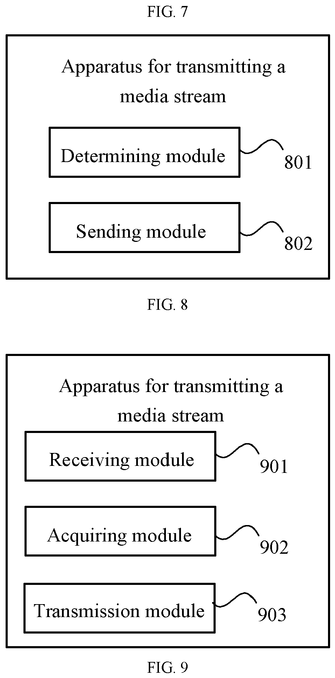

FIG. 7 is a principle schematic diagram of determining a target timestamp according to an embodiment of the present disclosure. FIG. 7 shows different processing logic of the server corresponding to different values of the pulling position parameter and audio parameter. The processing logic of the server will be introduced below. As the values of the pulling position parameter are divided into four types: default value, equal to 0, less than 0, and greater than 0. The four cases are described separately as follows.

Case 1: the pulling position parameter is a default value

1): In response to the pulling position parameter being a default value, and the audio parameter being a default value or the audio parameter being false, the server determines a value obtained by subtracting an absolute value of the default value of the pulling position parameter from a maximum timestamp as the target timestamp.

If the currently valid cache includes a video resource, the maximum timestamp is a maximum video timestamp latestVideoPts; if the currently valid cache does not include a video resource, the maximum timestamp is a maximum audio timestamp latestAudioPts.

The process above means that in the case where @fasSpts (pulling position parameter) is default in the frame acquisition request, the server will configure a default value for the pulling position parameter, and set @fasSpts = defaultSpts. In this case, if @onlyAudio (audio parameter) is also default in the frame acquisition request, the server will configure a default value for the audio parameter (the default value of the audio parameter is false) and set @onlyAudio = false; alternatively, the @onlyAudio field in the frame acquisition request carries a false value, that is, the frame acquisition request specifies that @onlyAudio = false. In this case, a processing rule of the server is as follows:

In response to the currently valid cache including a video resource, the server determines a value of latestVideoPts - |defaultSpts| as the target timestamp; in response to the currently valid cache not including a video resource, the server determines a value of latestAudioPts - |defaultSpts| as the target timestamp.

2): In response to the pulling position parameter being a default value and the audio parameter being true, a value obtained by subtracting an absolute value of the default value of the pulling position parameter from a maximum audio timestamp is determined as the target timestamp.

The process above means that in the case where @fasSpts (pulling position parameter) is default in the frame acquisition request, the server will configure a default value for the pulling position parameter, and set @fasSpts = defaultSpts. In this case, if the @onlyAudio field of the frame acquisition request carries a true value, that is, the frame acquisition request specifies that @onlyAudio = true (pure audio mode, in which only the audio stream is transmitted), the processing rule of the server is as follows: the server determines a value of latestAudioPts - |defaultSpts| as the target timestamp.

Case 2: the pulling position parameter is equal to 0

1): In response to the pulling position parameter being equal to 0, and the audio parameter being a default value or the audio parameter being false, a maximum timestamp is determined as the target timestamp.

If the currently valid cache includes a video resource, the maximum timestamp is a maximum video timestamp latestVideoPts; if the currently valid cache does not include a video resource, the maximum timestamp is a maximum audio timestamp latestAudioPts.

The foregoing process means that in the case where the @fasSpts field in the frame acquisition request carries the value 0 (@fasSpts = 0), if @onlyAudio (audio parameter) is also default in the frame acquisition request, the server will configure a default value for the audio parameter (the default value of the audio parameter is false) and set @onlyAudio = false; alternatively, the @onlyAudio field in the frame acquisition request carries a false value (the frame acquisition request specifies that @onlyAudio = false). In this case, the processing rule of the server is as follows:

In response to the currently valid cache including a video resource, the server determines latestVideoPts as the target timestamp; in response to the currently valid cache not including a video resource, the server determines latestAudioPts as the target timestamp.

2): In response to the pulling position parameter being equal to 0 and the audio parameter being true, a maximum audio timestamp is determined as the target timestamp.

The foregoing process means that in the case where the @fasSpts field in the frame acquisition request carries a value 0 (@fasSpts = 0), if the @onlyAudio field in the frame acquisition request carries a true value (the frame acquisition request specifies that @onlyAudio = true), that is, a pure audio mode in which only the audio stream is transmitted, the processing rule of the server is as follows: the server determines latestAudioPts as the target timestamp.

Case 3: the pulling position parameter is less than 0

1): In response to the pulling position parameter being less than 0, and the audio parameter being a default value or the audio parameter being false, a value obtained by subtracting an absolute value of the pulling position parameter from a maximum timestamp is determined as the target timestamp.

If the currently valid cache includes a video resource, the maximum timestamp is a maximum video timestamp latestVideoPts; if the currently valid cache does not include a video resource, the maximum timestamp is a maximum audio timestamp latestAudioPts.

The foregoing process means that in the case where the @fasSpts field in the frame acquisition request carries a value less than 0 (@fasSpts<0), if @onlyAudio (audio parameter) is also default in the frame acquisition request, the server will configure a default value for the audio parameter (the default value of the audio parameter is false) and set @onlyAudio = false; alternatively, the @onlyAudio field in the frame acquisition request carries a false value (the frame acquisition request specifies that @onlyAudio = false). In this case, the processing rule of the server is as follows:

In response to the currently valid cache including a video resource, the server determines latestVideoPts - |@fasSpts| as the target timestamp; in response to the currently valid cache not including a video resource, the server determines latestAudioPts - |@fasSpts| as the target timestamp.

2): In response to the pulling position parameter being less than 0 and the audio parameter being true, a value obtained by subtracting an absolute value of the pulling position parameter from a maximum audio timestamp is determined as the target timestamp.

The foregoing process means that in the case where the @fasSpts field in the frame acquisition request carries a value less than 0 (@fasSpts<0), if the @onlyAudio field in the frame acquisition request carries a true value (the frame acquisition request specifies that @onlyAudio = true), that is, a pure audio mode in which only the audio stream is transmitted, the processing rule of the server is as follows: the server determines latestAudioPts - |@fasSpts| as the target timestamp.

Case 4: the pulling position parameter is greater than 0

1): In response to the pulling position parameter being greater than 0, and the audio parameter being a default value or the audio parameter being false, a maximum timestamp is determined as the target timestamp when a timestamp fallback occurs in a cache.

If the currently valid cache includes a video resource, the maximum timestamp is a maximum video timestamp latestVideoPts; if the currently valid cache does not include a video resource, the maximum timestamp is a maximum audio timestamp latestAudioPts.

The foregoing process means that in the case where the @fasSpts field in the frame acquisition request carries a value greater than 0 (@fasSpts>0), if @onlyAudio (audio parameter) is also default in the frame acquisition request, the server will configure a default value for the audio parameter (the default value of the audio parameter is false) and set @onlyAudio = false; alternatively, the @onlyAudio field in the frame acquisition request carries a false value (the frame acquisition request specifies that @onlyAudio = false). In this case, the processing rule of the server is as follows:

When a timestamp fallback occurs in the cache, a) in response to the currently valid cache including a video resource, the server determines latestVideoPts as the target timestamp; b) in response to the currently valid cache not including a video resource, the server determines latestAudioPts as the target timestamp.

2): In response to the pulling position parameter being greater than 0 and the audio parameter being true, a maximum audio timestamp is determined as the target timestamp when a timestamp fallback occurs in a cache.

The foregoing process means that in the case where the @fasSpts field in the frame acquisition request carries a value greater than 0 (@fasSpts>0), if the @onlyAudio field in the frame acquisition request carries a true value (the frame acquisition request specifies that @onlyAudio = true), that is, a pure audio mode in which only the audio stream is transmitted, the processing rule of the server is as follows: the server determines latestAudioPts as the target timestamp.

3): In response to the pulling position parameter being greater than 0, and the audio parameter being a default value or the audio parameter being false, the pulling position parameter is determined as the target timestamp when no timestamp fallback occurs in a cache.

The foregoing process means that in the case where the @fasSpts field in the frame acquisition request carries a value greater than 0 (@fasSpts>0), if @onlyAudio (audio parameter) is also default in the frame acquisition request, the server will configure a default value for the audio parameter (the default value of the audio parameter is false) and set @onlyAudio = false; alternatively, the @onlyAudio field in the frame acquisition request carries a false value (the frame acquisition request specifies that @onlyAudio = false). In this case, the processing rule of the server is as follows: the server determines @fasSpts as the target timestamp when no timestamp fallback occurs in the cache.

4): In response to the pulling position parameter being greater than 0 and the audio parameter being true, the pulling position parameter is determined as the target timestamp when a timestamp fallback occurs in a cache.

The foregoing process means that in the case where the @fasSpts field in the frame acquisition request carries a value greater than 0 (@fasSpts>0), if the @onlyAudio field in the frame acquisition request carries a true value (the frame acquisition request specifies that @onlyAudio = true), that is, a pure audio mode in which only the audio stream is transmitted. The processing rule of the server is as follows: the server determines @fasSpts as the target timestamp when no timestamp fallback occurs in the cache.

As can be learned from the discussion for Cases 3) and 4) above, if the pulling position parameter is greater than 0 (@fasSpts>0) and no timestamp fallback occurs in the cache, regardless of the audio parameter being true, false, or a default value, the server determines the pulling position parameter as the target timestamp.

In the cases above, refer to S57A for the operation of determining, by the server, whether a timestamp fallback occurs; refer to S57B for the operation of updating the currently valid cache by the server, which are not described in detail herein.

On this basis, the server can perform corresponding processing logic in the case where the pulling position parameter is set to different values, thereby determining the target timestamp, wherein the target timestamp is used for determining a media frame starting from the starting position in the media stream.

In some embodiments, after determining the target timestamp, the server determines a media frame starting from the starting position by using Method 1 as follows:

Method 1: the server determines a media frame, of which the timestamp is closest to the target timestamp, in the currently valid cache as a media frame starting from the starting position.

In some embodiments, in the case where the audio parameter is default or the audio parameter is false, if the currently valid cache includes a video resource, a keyframe (I-frame) whose timestamp is closest to the target timestamp in the video resource is determined as a media frame starting from the starting position; if the currently valid cache does not include a video resource, an audio frame whose timestamp is closest to the target timestamp is determined as a media frame starting from the starting position.

In some embodiments, in the case where the audio parameter is true, the server directly uses the audio frame whose timestamp is closest to the target timestamp as the media frame starting from the starting position. The process includes exemplary scenarios as follows:

A): When @fasSpts = defaultSpts, and @onlyAudio is default or @onlyAudio = false, refer to example 1) in Case 1 above. If the currently valid cache includes a video resource, the target timestamp is latestVideoPts - |defaultSpts|, and the server uses an I-frame whose PTS is closest to latestVideoPts - |defaultSpts| as the media frame starting from the starting position. In addition, if the currently valid cache does not include a video resource, the target timestamp is latestAudioPts - |defaultSpts|, and the server uses an audio frame whose PTS is closest to latestAudioPts - |defaultSpts| as the media frame starting from the starting position.

B): When @fasSpts = defaultSpts, and @onlyAudio = true, refer to example 2) in Case 1 above. The target timestamp is latestAudioPts - |defaultSpts|, and the server uses an audio frame whose PTS is closest to latestAudioPts - |defaultSpts| as the media frame starting from the starting position.

C): When @fasSpts = 0, and @onlyAudio is default or @onlyAudio = false, refer to example 1) in Case 2 above. If the currently valid cache includes a video resource, the target timestamp is latestVideoPts, and the server uses an I-frame whose PTS is closest to latestVideoPts as the media frame starting from the starting position. In addition, if the currently valid cache does not include a video resource, the target timestamp is latestAudioPts, and the server uses an audio frame whose PTS is closest to latestAudioPts as the media frame starting from the starting position.

D): When @fasSpts = 0, and @onlyAudio = true, refer to example 2) in Case 2 above. The target timestamp is latestAudioPts, and the server uses an audio frame whose PTS is closest to latestAudioPts as the media frame starting from the starting position.

E): When @fasSpts<0, and @onlyAudio is default or @onlyAudio = false, refer to example 1) in Case 3 above. If the currently valid cache includes a video resource, the target timestamp is latestVideoPts - |@fasSpts|, and the server uses an I-frame whose PTS is closest to latestVideoPts - |@fasSpts| as the media frame starting from the starting position. On the contrary, if the currently valid cache does not include a video resource, the target timestamp is latestAudioPts - |@fasSpts|, and the server uses an audio frame whose PTS is closest to latestAudioPts - |@fasSpts| as the media frame starting from the starting position.

F): When @fasSpts<0, and @onlyAudio = true, refer to example 2) in Case 3 above. The target timestamp is latestAudioPts - |@fasSpts|, and the server uses an audio frame whose PTS is closest to latestAudioPts - |@fasSpts| as the media frame starting from the starting position.

G): When @fasSpts>0, @onlyAudio is default or @onlyAudio = false, and a timestamp fallback occurs in the cache, refer to example 1) in Case 4 above. If the currently valid cache includes a video resource, the target timestamp is latestVideoPts, and the server uses an I-frame whose PTS is closest to latestVideoPts (latest I-frame) as the media frame starting from the starting position. If the currently valid cache does not include a video resource, the target timestamp is latestAudioPts, and the server uses an audio frame whose PTS is closest to latestAudioPts (latest audio frame) as the media frame starting from the starting position.

H): When @fasSpts>0, @onlyAudio = true, and a timestamp fallback occurs in the cache, refer to example 2) in Case 4 above. The target timestamp is latestAudioPts, and the server uses an audio frame whose PTS is closest to latestAudioPts (latest audio frame) as the media frame starting from the starting position.

The rest can be deduced by analogy. When @fasSpts>0, the rest of the examples in Case 4 above are discussed. After determining the target timestamp, based on Method 1, the server determines a media frame whose timestamp is closest to the target timestamp in the currently valid cache as the media frame starting from the starting position. The examples are not described herein one by one.

In some embodiments, when @fasSpts>0, in addition to Method 1 above, the server further determines the media frame based on Method 2 below:

Method 2: if a target media frame exists in the currently valid cache, the server determines the target media frame as a media frame starting from the starting position, wherein a timestamp of the target media frame is greater than or equal to the target timestamp and is closest to the target timestamp.

In some embodiments, in the case where the audio parameter is default or the audio parameter is false, if the currently valid cache includes a video resource, the target media frame is an I-frame in the video resource; if the currently valid cache does not include a video resource, the target media frame is an audio frame.

In some embodiments, in the case where the audio parameter is true, the target media frame is an audio frame. The process includes exemplary scenarios as follows:

I): When @fasSpts>0, @onlyAudio is default or @onlyAudio = false, and no timestamp fallback occurs in the cache, refer to example 3) in Case 4 above. In this case, the target timestamp is @fasSpts, and if the currently valid cache includes a video resource, the server traverses I-frames one by one in ascending order of PTSs starting from an I-frame with a minimum PTS, until the first I-frame with PTS≥@fasSpts (target media frame) is found, indicating that the target media frame exists in the currently valid cache. The server determines the target media frame as the media frame starting from the starting position. If the currently valid cache does not include a video resource, the server traverses audio frames one by one in ascending order of PTSs starting from an audio frame with a minimum PTS, until the first audio frame with PTS≥@fasSpts (target media frame) is found, indicating that the target media frame exists in the currently valid cache. The server determines the target media frame as the media frame starting from the starting position.

J): When @fasSpts>0, @onlyAudio = true, and no timestamp fallback occurs in the cache, refer to example 4) in Case 4 above. In this case, the target timestamp is @fasSpts, and the server traverses audio frames one by one in ascending order of PTSs starting from an audio frame with a minimum PTS, until the first audio frame with PTS≥@fasSpts (target media frame) is found, indicating that the target media frame exists in the currently valid cache. The server determines the target media frame as the media frame starting from the starting position.

Method 2 describes how the server determines the media frame starting from the starting position when the target media frame can be found in the currently valid cache. However, in some embodiments, it is possible that the target media frame is not found in the currently valid cache. Such a case generally occurs in the scenario of live streaming service. A viewer terminal's frame acquisition request for pulling media frames starting from @fasSpts arrives at the server first, while the media frame corresponding to @fasSpts (live streaming video frame) is being transmitted in a stream pushing phase. At this point, the server further determines the media frame starting from the starting position based on Method 3 below.

Method 3: If the target media frame does not exist in the currently valid cache, the server enters a waiting state, and when the target media frame is written into the currently valid cache, the server determines the target media frame as a media frame starting from the starting position, wherein the timestamp of the target media frame is greater than or equal to the target timestamp and is closest to the target timestamp.

In some embodiments, in the case where the audio parameter is default or the audio parameter is false, if the currently valid cache includes a video resource, the target media frame is an I-frame in the video resource; if the currently valid cache does not include a video resource, the target media frame is an audio frame.

In some embodiments, in the case where the audio parameter is true, the target media frame is an audio frame.

Specifically, exemplary scenarios are described as follows:

K): When @fasSpts>0, @onlyAudio is default or @onlyAudio = false, and no timestamp fallback occurs in the cache, refer to example 3) in Case 4 above. In this case, the target timestamp is @fasSpts, and if the currently valid cache includes a video resource, the server traverses I-frames one by one in ascending order of PTSs starting from an I-frame with a minimum PTS. If no I-frame with PTS≥@fasSpts (target media frame) can be found after all I-frames are traversed, indicating that the target media frame does not exist in the currently valid cache, and the server enters a waiting state; when the first I-frame with PTS≥@fasSpts (target media frame) is written into the currently valid cache, the server determines the target media frame as the media frame starting from the starting position. If the currently valid cache does not include a video resource, the server traverses audio frames one by one in ascending order of PTSs starting from an audio frame with a minimum PTS. If no audio frame with PTS≥@fasSpts (target media frame) can be found after all audio frames are traversed, indicating that the target media frame does not exist in the currently valid cache, and the server enters a waiting state; when the first audio frame with PTS≥@fasSpts (target media frame) is written into the currently valid cache, the server determines the target media frame as the media frame starting from the starting position.

L): When @fasSpts>0, @onlyAudio = true and no timestamp fallback occurs in the cache, refer to example 4) in Case 4 above. In this case, the target timestamp is @fasSpts, and the server traverses audio frames one by one in ascending order of PTSs starting from an audio frame with a minimum PTS. If no audio frame with PTS≥@fasSpts (target media frame) can be found after all audio frames are traversed, indicating that the target media frame does not exist in the currently valid cache, and the server enters a waiting state; when the first audio frame with PTS≥@fasSpts (target media frame) is written into the currently valid cache, the server determines the target media frame as the media frame starting from the starting position.

Method 3 describes how the server determines the media frame starting from the starting position when the target media frame is not found in the currently valid cache. In some embodiments, @fasSpts carried in the frame acquisition request is possibly a large outlier due to the occurrence of an exception, and processing based on Method 3 above will result in a long waiting time. If concurrent frame acquisition requests have exceptions in a big data scenario, these frame acquisition requests will enter a waiting state in congestion and take up processing resources of the server, which will cause a great loss of performance to the server.

In view of this, the server also sets a timeout threshold. Therefore, based on Method 4 below, it can be determined whether to return pulling failure information based on the timeout threshold. Method 4 is detailed below.

Method 4: if the target media frame does not exist in the currently valid cache and a difference between the target timestamp and a maximum timestamp is greater than a timeout threshold, the server sends pulling failure information, wherein the timestamp of the target media frame is greater than or equal to the target timestamp and is closest to the target timestamp.

In some embodiments, in the case where the audio parameter is default or the audio parameter is false, if the currently valid cache includes a video resource, the maximum timestamp is a maximum video timestamp latestVideoPts; if the currently valid cache does not include a video resource, the maximum timestamp is a maximum audio timestamp latestAudioPts.

In some embodiments, in the case where the audio parameter is true, the maximum timestamp is a maximum audio timestamp latestAudioPts.

It is assumed that the timeout threshold is timeoutPTS, the timeout threshold is any value greater than or equal to 0. The timeout threshold is a value preset by the server, or a value customized by a technician based on a service scenario. The embodiments of the present disclosure do not specifically limit the acquisition manner of the timeout threshold. In some embodiments, exemplary scenarios are described as follows:

M): When @fasSpts>0, @onlyAudio is default or @onlyAudio = false, and no timestamp fallback occurs in the cache, refer to example 3) in Case 4 above. In this case, the target timestamp is @fasSpts, and if the currently valid cache includes a video resource, the server traverses I-frames one by one in ascending order of PTSs starting from an I-frame with a minimum PTS. If no I-frame with PTS≥@fasSpts (target media frame) can be found after all I-frames are traversed, indicating that the target media frame does not exist in the currently valid cache. The server determines whether a difference between @fasSpts and latestVideoPts is greater than timeoutPTS. If @fasSpts - latestVideoPts>timeoutPTS, the server sends pulling failure information to the terminal. If @fasSpts - latestVideoPts≤timeoutPTS, the server enters a waiting state, that is, corresponding to the operations performed in example K) in Case 3 above. If the currently valid cache does not include a video resource, the server traverses audio frames one by one in ascending order of PTSs starting from an audio frame with a minimum PTS. If no audio frame with PTS≥@fasSpts (target media frame) can be found after all audio frames are traversed, indicating that the target media frame does not exist in the currently valid cache. The server determines whether a difference between @fasSpts and latestVideoPts is greater than timeoutPTS. If @fasSpts - latestVideoPts>timeoutPTS, the server sends pulling failure information to the terminal. If @fasSpts - latestAudioPts≤timeoutPTS, the server enters a waiting state, that is, corresponding to the operations performed in example K) in Case 3 above.

N): When @fasSpts>0, @onlyAudio = true, and no timestamp fallback occurs in the cache, refer to example 4) in Case 4 above. In this case, the target timestamp is @fasSpts, the server traverses audio frames one by one in ascending order of PTSs starting from an audio frame with a minimum PTS. If no audio frame with PTS≥@fasSpts (target media frame) can be found after all audio frames are traversed, indicating that the target media frame does not exist in the currently valid cache. The server determines whether a difference between @fasSpts and latestVideoPts is greater than timeoutPTS. If @fasSpts - latestVideoPts>timeoutPTS, the server sends pulling failure information to the terminal. If @fasSpts - latestAudioPts≤timeoutPTS, the server enters a waiting state, that is, corresponding to the operations performed in example K) in Case 3 above.

A combination of Method 3 and Method 4 above provides exception processing logic when @fasSpts>0 and the target media frame does not exist in the currently valid cache. If the difference between the target timestamp and the maximum timestamp is less than or equal to the timeout threshold, based on Method 3, the server enters a waiting state (waiting processing mode), and when the target media frame arrives, the server determines the target media frame as the media frame starting from the starting position. If the difference between the target timestamp and the maximum timestamp is greater than the timeout threshold, based on Method 4, the server sends pulling failure information (error processing mode). In this case, the server determines that the frame acquisition request is erroneous, and therefore directly returns the pulling failure information to the terminal, wherein the pulling failure information is in the form of an error code.

In the foregoing step, based on the pulling position parameter of the media stream, the server determines a media frame starting from the starting position in the media stream. Because the frame acquisition request carries the pulling position parameter, the server can conveniently determine, in the process of responding to the frame acquisition request, a media frame for starting transmitting media frames at the target bit rate, thereby improving the flexibility of the resource transmission process. Further, in a scenario where the bit rate needs to be switched dynamically, it is only necessary to change the address information (@url field) and the pulling position parameter (@fasSpts field) carried in the frame acquisition request, and then media frames can be transmitted at a new bit rate starting from a media frame starting from any specified starting position, thus implementing adaptive bit rate switching.

In S58, the server transmits the media frames starting from the starting position to the terminal at the target bit rate.

After acquiring the media frames starting from the starting position, the server transmits the media frames starting from the starting position to the terminal at the target bit rate. In this process, the server continuously transmits media frames to the terminal like water, which is figuratively known as "media streaming".

In an exemplary scenario, if the server is a CDN server, the target address information is a domain name. The terminal sends a frame acquisition request to a central platform of the CDN server. The central platform obtains a CNAME (alias) record corresponding to the domain name by invoking a domain name system (DNS, which is essentially a domain name resolution library) to resolve the domain name. By resolving the CNAME record again based on geographic location information of the terminal, an Internet Protocol (IP) address of an edge server nearest to the terminal is obtained. In this case, the central platform directs the frame acquisition request to the obtained edge server. In response to the frame acquisition request, the edge server provides the media frames of the multimedia resources to the terminal at the target bit rate, thus enabling the terminal to access the multimedia resource with the target bit rate nearby.

In some embodiments, the embodiments of the present disclosure provide an internal back-to-source mechanism inside the CDN server. In the CDN system, it is possible that the multimedia resource specified by the frame acquisition request is not available in the edge server. In this case, the edge server pulls the media stream from a parent node device.

Then the edge server sends a back-to-source pulling request to the parent node device. The parent node device returns the corresponding media stream to the edge server in response to the back-to-source pulling request, and then the edge server sends the corresponding media stream to the terminal.

In the above process, when the edge server obtains the back-to-source pulling request, if the frame acquisition request sent by the terminal carries the @fasSpts field, the edge server directly determines the frame acquisition request as the back-to-source pulling request and forwards the back-to-source pulling request to the parent node device. Conversely, if the @fasSpts field is default in the frame acquisition request sent by the terminal, the edge server needs to configure a default @fasSpts value for the @ fasSpts field, then embeds the @fasSpts field in the frame acquisition request, and sets the value stored in the @fasSpts field to defaultSpts, to obtain the back-to-source pulling request.

In some embodiments, the parent node device is a third-party source server. In this case, the back-to-source pulling request needs to carry the @fasSpts field. In some embodiments, the parent node device is also a node server within the CDN system (e.g., a central platform or a node device of a distributed database system). If the frame acquisition request carries the @fasSpts field, the edge server traces back to source according to an actual value of the @ fasSpts field; otherwise, the edge server traces back to source based on the default value @fasSpts = defaultSpts. The embodiments of the present disclosure do not specifically limit the back-to-source manner of the edge server.

The method embodiment provided in the embodiments of the present disclosure is described above, and the virtual apparatus provided in the embodiments of the present disclosure is illustrated below.

FIG. 8 is a block diagram of an apparatus for transmitting a media stream according to an exemplary embodiment. The apparatus is applied to a terminal, and includes a determining module 801 and a sending module 802, wherein the determining module 801 is configured to determine, from address information of a media stream with a plurality of bit rates, target address information of the media stream with a target bit rate in response to a frame acquisition instruction for the media stream. The determining module 801 is further configured to determine a starting position of to-be-acquired media frames corresponding to the target bit rate in the media stream. The sending module 802 is configured to send a frame acquisition request carrying the target address information and the starting position to a server, wherein the frame acquisition request is configured to instruct the server to return, at the target bit rate, the media frames starting from the starting position in the media stream.

In some embodiments, in response to the frame acquisition instruction being triggered by a playback operation for the media stream, the determining module 801 is configured to determine a position of a media frame, which is generated at an operation time of the playback operation, in the media stream as the starting position; or determine a position of a media frame, which is selected by the frame acquisition instruction, in the media stream as the starting position; or determine a position of a first media frame in the media stream as the starting position.

In some embodiments, the frame acquisition instruction is triggered when playback status information of the media stream satisfies a bit rate switching condition.

In some embodiments, the apparatus further includes: an acquiring module, configured to acquire playback status information of the media stream upon reception of any media frame in the media stream. The determining module is 801 is further configured to determine, from the address information of the media stream with the plurality of bit rates, the target address information of the media stream with the target bit rate in response to the playback status information satisfying a bit rate switching condition. The determining module 801 is configured to determine the starting position of the to-be-acquired media frames corresponding to the target bit rate in the media stream according to a position of the any media frame in the media stream.

In some embodiments, the determining module 801 is configured to: determine the target bit rate based on the playback status information and a current bit rate in response to the playback status information satisfying the bit rate switching condition; and determine, from the address information of the media stream with the plurality of bit rates, the target address information of the media stream with the target bit rate in response to the target bit rate being not equal to the current bit rate.

In some embodiments, the playback status information includes a first cache volume, and the first cache volume is a current cache volume of the media stream that has been cached but not played. The determining module 801 is configured to: determine the target bit rate based on the playback status information and the current bit rate in response to the first cache volume being greater than a first cache volume threshold or the first cache volume being less than a second cache volume threshold, wherein the second cache volume threshold is less than the first cache volume threshold.

In some embodiments, the determining module 801 is configured to: acquire a plurality of candidate bit rates; acquire a second cache volume corresponding to each candidate bit rate according to a relationship between the plurality of candidate bit rates and the current bit rate, the playback status information, and a position of the any media frame of the media stream in a media frame group in which the any media frame is located; and determine the target bit rate from the plurality of candidate bit rates according to a relationship between the second cache volume corresponding to each candidate bit rate and the first cache volume threshold or the second cache volume threshold. The second cache volume corresponding to each candidate bit rate is a cache volume of the media stream that has been cached but not played at the end of transmission of the media frame group in which the any media frame is located in response to a bit rate being switched to the candidate bit rate.

In some embodiments, the frame acquisition request further includes at least one of a first extended parameter or a second extended parameter, wherein the first extended parameter indicates whether the media frames are audio frames, and the second extended parameter indicates that transmission of the media frames in the media stream starts from a target timestamp indicated by the second extended parameter.

In some embodiments, the address information of the media stream with the plurality of bit rates is stored in a media presentation description of the media stream.

In some embodiments, the media presentation description includes a version number and a media description set, wherein the version number includes at least one of a version number of the media presentation description or a version number of a resource transmission standard, the media description set includes multiple pieces of media description meta-information, each piece of media description meta-information corresponds to the media stream of one bit rate, and each piece of media description meta-information includes a length of a group of pictures and attribute information of the media stream with the bit rate corresponding to the media description meta-information.

It should be noted that, when the apparatus for transmitting a media stream provided in the foregoing embodiment transmits the media stream, the division of the foregoing function modules is merely used as an example. In practical applications, the foregoing functions are allocated to and completed by different function modules as required, that is, an internal structure of the apparatus is divided into different function modules to complete all or some of the functions described above. In addition, the apparatus for transmitting a media stream provided in the foregoing embodiment belongs to the same conception as the embodiment of the method for transmitting a media stream. For a specific implementation process, refer to the method embodiment, and details are not described herein again.

FIG. 9 is a block diagram of an apparatus for transmitting a media stream according to an exemplary embodiment. The apparatus is applied to a server, and includes a receiving module 901, an acquiring module 902, and a transmission module 903, wherein the receiving module 901 is configured to receive a frame acquisition request, wherein the frame acquisition request carries target address information of a media stream with a target bit rate and a starting position of to-be-acquired media frames corresponding to the target bit rate in the media stream. The acquiring module 902 is configured to acquire, from an address corresponding to the target address information, the media frames starting from the starting position in response to the frame acquisition request. The transmission module 903 is configured to transmit the media frames starting from the starting position to a terminal at the target bit rate.

In some embodiments, the acquiring module 902 is configured to determine a target timestamp based on the starting position; and determine and acquire, based on the target timestamp, the media frames starting from the starting position.

In some embodiments, in response to the starting position being a pulling position parameter, the acquiring module 902 is configured to determine the target timestamp based on an audio parameter and the pulling position parameter.

In some embodiments, the acquiring module 902 is configured to: determine a value obtained by subtracting an absolute value of the default value of the pulling position parameter from a maximum timestamp as the target timestamp in response to the pulling position parameter being a default value and the audio parameter being a default value or the audio parameter being false; or determine a value obtained by subtracting an absolute value of the default value of the pulling position parameter from a maximum audio timestamp as the target timestamp in response to the pulling position parameter being a default value and the audio parameter being true; or determine a maximum timestamp as the target timestamp in response to the pulling position parameter being equal to 0 and the audio parameter being a default value or the audio parameter being false; or determine a maximum audio timestamp as the target timestamp in response to the pulling position parameter being equal to 0 and the audio parameter being true; or determine a value obtained by subtracting an absolute value of the pulling position parameter from a maximum timestamp as the target timestamp in response to the pulling position parameter being less than 0 and the audio parameter being a default value or the audio parameter being false; or determine a value obtained by subtracting an absolute value of the pulling position parameter from a maximum audio timestamp as the target timestamp in response to the pulling position parameter being less than 0 and the audio parameter being true; or determine a maximum timestamp as the target timestamp when a timestamp fallback occurs in a cache in response to the pulling position parameter being greater than 0 and the audio parameter being a default value or the audio parameter being false; or determine a maximum audio timestamp as the target timestamp when a timestamp fallback occurs in a cache in response to the pulling position parameter being greater than 0 and the audio parameter being true; or determine the pulling position parameter as the target timestamp in response to the pulling position parameter being greater than 0 and no timestamp fallback occurring in a cache.

In some embodiments, the acquiring module 902 is further configured to: determine that the timestamp fallback occurs in the cache in response to timestamps of media frames in a media frame sequence in the cache not increasing non-monotonically; and determine that no timestamp fallback occurs in the cache in response to timestamps of the media frames in a media frame sequence in the cache not increasing non-monotonically, wherein the media frame sequence is a sequence formed by a plurality of media frames cached in the cache.

In some embodiments, the acquiring module 902 is configured to: determine that the media frame sequence increases non-monotonically in response to the cache including a video resource and timestamps of keyframes in the keyframe sequence increasing non-monotonically, wherein the keyframe sequence is a sequence formed by a plurality of cached keyframes; or determine that a media frame sequence increases non-monotonically in response to the cache not including a video resource and timestamps of audio frames in the audio frame sequence increasing non-monotonically, wherein the audio frame sequence is a sequence formed by a plurality of cached audio frames.

In some embodiments, the acquiring module 902 is configured to: determine a target media frame as a media frame starting from the starting position in response to the target media frame being present in a currently valid cache, wherein a timestamp of the target media frame is greater than or equal to the target timestamp and is closest to the target timestamp; or enter a waiting state in response to a target media frame being not present in a currently valid cache, and determine the target media frame as a media frame starting from the starting position in response to the target media frame being written into the currently valid cache, wherein a timestamp of the target media frame is greater than or equal to the target timestamp and is closest to the target timestamp; or send pulling failure information in response to a target media frame being not present in a currently valid cache and a difference between the target timestamp and a maximum timestamp being greater than a timeout threshold, wherein a timestamp of the target media frame is greater than or equal to the target timestamp and is closest to the target timestamp.

It should be noted that, when the apparatus for transmitting a media stream provided in the foregoing embodiment transmits the media stream, the division of the foregoing function modules is merely used as an example. In practical applications, the foregoing functions are allocated to and completed by different function modules as required, that is, an internal structure of the apparatus is divided into different function modules to complete all or some of the functions described above. In addition, the apparatus for transmitting a media stream provided in the foregoing embodiment belongs to the same conception as the embodiment of the method for transmitting a media stream. For a specific implementation process, refer to the method embodiment, and details are not described herein again.

The virtual apparatus provided in the embodiment of the present disclosure is described above, and the hardware apparatus provided in the embodiment of the present disclosure is illustrated below.

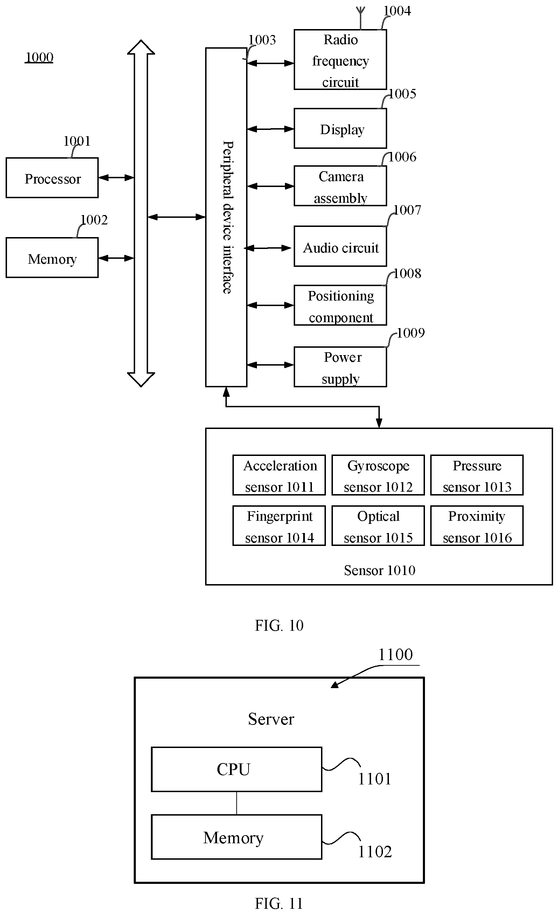

FIG. 10 is a structural block diagram of a terminal 1000 according to an exemplary embodiment of the present disclosure. The terminal 1000 may be a smartphone, a tablet computer, a moving picture experts group audio layer III (MP3) player, a moving picture experts group audio layer IV (MP4) player, a laptop computer, or a desktop computer. The terminal 1000 may also be referred to as user equipment, a portable terminal, a laptop terminal, a desktop terminal, or the like.

Generally, the terminal 1000 includes at least one processor 1001 and at least one memory 1002.

The processor 1001 includes one or more processing cores, for example, a 4-core processor or an 8-core processor. The processor 1001 is implemented by using at least one hardware form of digital signal processing (DSP), a field-programmable gate array (FPGA), and a programmable logic array (PLA). The processor 1001 also includes a main processor and a coprocessor. The main processor is configured to process data in an awake state, also referred to as a central processing unit (CPU), and the coprocessor is a low-power processor configured to process data in a standby state. In some embodiments, the processor 1001 is integrated with a graphics processing unit (GPU). The GPU is configured to be responsible for rendering and drawing content that a display needs to display. In some embodiments, the processor 1001 further includes an artificial intelligence (AI) processor. The AI processor is configured to process computing operations related to machine learning.

The memory 1002 includes one or more computer readable storage media, which is non-transient. The memory 1002 further includes a high-speed random access memory and a non-volatile memory such as one or more magnetic disk storage devices and a flash storage device. In some embodiments, the non-transitory computer readable storage medium in the memory 1002 is configured to store at least one instruction. The at least one instruction is executed by the processor 1001 to implement the method for transmitting a media stream provided in the method embodiment of the present disclosure.

In some embodiments, the terminal 1000 further optionally includes a peripheral device interface 1003 and at least one peripheral device. The processor 1001, the memory 1002, and the peripheral device interface 1003 may be connected through a bus or a signal cable. Each peripheral device is connected to the peripheral device interface 1003 through a bus, a signal cable, or a circuit board. Specifically, the peripheral device includes at least one of the following: a radio frequency circuit 1004, a touch display 1005, a camera assembly 1006, an audio circuit 1007, a positioning component 1008, and a power supply 1009.

The peripheral device interface 1003 may be configured to connect at least one peripheral device related to input/output (I/O) to the processor 1001 and the memory 1002. In some embodiments, the processor 1001, the memory 1002, and the peripheral device interface 1003 are integrated into the same chip or circuit board; in some other embodiments, any one or two of the processor 1001, the memory 1002, and the peripheral device interface 1003 may be implemented on an independent chip or circuit board. This is not limited in this embodiment.

The radio frequency circuit 1004 is configured to receive and transmit a radio frequency (RF) signal, also referred to as an electromagnetic signal. The radio frequency circuit 1004 communicates with a communications network and another communications device by using the electromagnetic signal. The radio frequency circuit 1004 may convert an electric signal into an electromagnetic signal for transmission, or convert a received electromagnetic signal into an electric signal. Optionally, the radio frequency circuit 1004 includes: an antenna system, an RF transceiver, one or more amplifiers, a tuner, an oscillator, a digital signal processor, a codec chip set, a subscriber identity module card, and the like. The radio frequency circuit 1004 communicates with another terminal through at least one wireless communication protocol. The wireless communication protocol includes, but is not limited to: world wide web, metropolitan area network, intranet, generations of mobile communication networks (2G, 3G, 4G, and 5G), a wireless local area network and/or a wireless fidelity (Wi-Fi) network. In some embodiments, the radio frequency circuit 1004 further includes a near field communication (NFC) related circuit, and is not limited in the present disclosure.

The display 1005 is configured to display a user interface (UI). The UI includes a graph, a text, an icon, a video, and any combination thereof. When the display 1005 is a touch display, the display 1005 is further capable of acquiring a touch signal on or above a surface of the display 1005. The touch signal may be inputted to the processor 1001 for processing as a control signal. In this case, the display 1005 is further configured to provide a virtual button and/or a virtual keyboard, which is also referred to as a soft button and/or a soft keyboard. In some embodiments, there is one display 1005, disposed on a front panel of the terminal 1000. In some other embodiments, there are at least two displays 1005, disposed on different surfaces of the terminal 1000 respectively or in a folded design. In still other embodiments, the display 1005 is a flexible display, disposed on a curved surface or a folded surface of the terminal 1000. Even, the display 1005 is further set in a non-rectangular irregular pattern, namely, a special-shaped screen. The display 1005 is prepared by using materials such as a liquid crystal display (LCD), an organic light-emitting diode (OLED), or the like.

The camera assembly 1006 is configured to acquire an image or a video. In some embodiments, the camera assembly 1006 includes a front-facing camera and a rear-facing camera. Generally, the front-facing camera is disposed on a front panel of the terminal, and the rear-facing camera is disposed on a back surface of the terminal. In some embodiments, there are at least two rear-facing cameras, which are respectively any one of a main camera, a depth-of-field camera, a wide-angle camera, and a telephoto camera, to implement a background blurring function by fusing the main camera and the depth-of-field camera, and panoramic shooting and virtual reality (VR) shooting functions or other fusing shooting functions by fusing the main camera and the wide-angle camera. In some embodiments, the camera assembly 1006 further includes a flash. The flash is a single color temperature flash, or a double color temperature flash. The double color temperature flash is a combination of a warm light flash and a cold light flash, and is used for light compensation under different color temperatures.

The audio circuit 1007 includes a microphone and a speaker. The microphone is configured to collect sound waves of a user and an environment, and convert the sound waves into electric signals and input the electrical signals into the processor 1001 for processing, or input the electrical signals into the radio frequency circuit 1004 to implement voice communication. For the purpose of stereo sound collection or noise reduction, there may be a plurality of microphones, respectively disposed at different parts of the terminal 1000. The microphone may be further an array microphone or an omnidirectional collection microphone. The speaker is configured to convert electric signals from the processor 1001 or the radio frequency circuit 1004 into sound waves. The speaker is a conventional thin-film speaker or a piezoelectric ceramic speaker. In a case that the speaker is the piezoelectric ceramic speaker, electric signals are not only converted into sound waves audible to human, but converted into sound waves inaudible to human for ranging and other purposes. In some embodiments, the audio circuit 1007 further includes an earphone jack.

The positioning component 1008 is configured to position a current geographic location of the terminal 1000, to implement a navigation or a location based service (LBS). The positioning component 1008 is a positioning component based on the Global Positioning System (GPS) of the United States, the BeiDou system of China, or the GALILEO System of Russia.

The power supply 1009 is configured to supply power for various components in the terminal 1000. The power supply 1009 is an alternating current, a direct current, a disposable battery, or a rechargeable battery. When the power supply 1009 includes the rechargeable battery, the rechargeable battery is a wired rechargeable battery or a wireless rechargeable battery. The wired rechargeable battery is a battery charged through a wired circuit, and the wireless rechargeable battery is a battery charged through a wireless coil. The rechargeable battery is further configured to support a fast charge technology.

In some embodiments, the terminal 1000 further includes one or more sensors 1010. The one or more sensors 1010 include, but are not limited to: an acceleration sensor 1011, a gyroscope sensor 1012, a pressure sensor 1013, a fingerprint sensor 1014, an optical sensor 1015, and a proximity sensor 1016.

The acceleration sensor 1011 may detect acceleration on three coordinate axes of a coordinate system established by the terminal 1000. For example, the acceleration sensor 1011 is configured to detect components of gravity acceleration on the three coordinate axes. The processor 1001 controls, according to a gravity acceleration signal collected by the acceleration sensor 1011, the touch display 1005 to display the user interface in a landscape view or a portrait view. The acceleration sensor 1011 is further configured to collect game or user motion data.

The gyroscope sensor 1012 detects a body direction and a rotation angle of the terminal 1000. The gyroscope sensor 1012 cooperates with the acceleration sensor 1011 to collect a 3D action performed by the user on the terminal 1000. The processor 1001 implements the following functions according to the data collected by the gyroscope sensor 1012: motion sensing (such as changing the UI according to a tilt operation of the user), image stabilization at shooting, game control, and inertial navigation.

The pressure sensor 1013 is disposed on a side frame of the terminal 1000 and/or a lower layer of the touch display 1005. When the pressure sensor 1013 is disposed on the side frame of the terminal 1000, a holding signal of the user on the terminal 1000 is detected. The processor 1001 performs left and right hand recognition or a quick operation according to the holding signal collected by the pressure sensor 1013. When the pressure sensor 1013 is disposed on the lower layer of the touch display 1005, the processor 1001 controls an operable control on the UI according to a pressure operation of the user on the touch display 1005. The operable control includes at least one of a button control, a scroll bar control, an icon control and a menu control.

The fingerprint sensor 1014 is configured to collect a fingerprint of a user, and the processor 1001 identifies an identity of the user according to the fingerprint collected by the fingerprint sensor 1014, or the fingerprint sensor 1014 identifies an identity of the user according to the collected fingerprint. When the identity of the user is identified as a trusted identity, the processor 1001 authorizes the user to perform a related sensitive operation. The sensitive operation includes unlocking a screen, viewing encrypted information, downloading software, payment, changing settings, and the like. The fingerprint sensor 1014 is disposed on a front surface, a back surface, or a side surface of the terminal 1000. When the terminal 1000 is provided with a physical button or a vendor logo, the fingerprint sensor 1014 is integrated with the physical button or the vendor logo.

The optical sensor 1015 is configured to collect ambient light intensity. In an embodiment, the processor 1001 controls display brightness of the touch display 1005 according to the ambient light intensity collected by the optical sensor 1015. When the ambient light intensity is relatively high, the display brightness of the touch display 1005 is turned up. When the ambient light intensity is relatively low, the display brightness of the touch display 1005 is turned down. In another embodiment, the processor 1001 further dynamically adjusts a camera parameter of the camera assembly 1006 according to the ambient light intensity collected by the optical sensor 1015.

The proximity sensor 1016, also referred to as a distance sensor, is usually disposed on the front panel of the terminal 1000. The proximity sensor 1016 is configured to collect a distance between a user and the front surface of the terminal 1000. In an embodiment, when the proximity sensor 1016 detects that the distance between the user and the front surface of the terminal 1000 gradually becomes smaller, the touch display 1005 is controlled by the processor 1001 to switch from a screen-on state to a screen-off state. In a case that the proximity sensor 1016 detects that the distance between the user and the front surface of the terminal 1000 gradually becomes larger, the touch display 1005 is controlled by the processor 1001 to switch from the screen-off state to the screen-on state.

A person skilled in the art understands that the structure shown in FIG. 10 does not constitute a limitation to the terminal 1000, and the terminal may include more or fewer components than those shown in the figure, or some components may be combined, or a different component deployment may be used.

FIG. 11 is a schematic structural diagram of a server according to an embodiment of the present disclosure. The server 1100 may vary greatly due to different configurations or performance and includes at least one central processing unit (CPU) 1101 and at least one memory 1102, wherein the at least one memory 1102 has at least one instruction stored therein, the at least one instruction being loaded and executed by the at least one CPU 1101 to implement the method for transmitting a media stream provided in the method embodiments described above. Certainly, the server further includes components such as a wired or wireless network interface, and an input/output interface, for input and output. The server further includes other components for implementing the functions of the device, which will not be described herein.

The foregoing terminal and server are electronic devices. The electronic device includes at least one processor, and at least one memory configured to store at least one instruction executable by the at least one processor. The at least one processor, when loading and executing the at least one instruction, is caused to perform the method steps of the method for transmitting a media stream in the foregoing embodiments. In some embodiments, all the features and applications described in the foregoing embodiments may be executed by the at least one instruction stored in a storage medium of the memory. When the instructions are executed by the at least one processor, the at least one processor may be caused to perform actions indicated by the instructions.

In an exemplary embodiment, a storage medium including instructions is further provided, such as a memory including instructions. The instructions may be executed by a processor of an electronic device to implement method operations of the method for transmitting a media stream shown in the foregoing embodiments. In some embodiments, all the features and applications described in the foregoing embodiments may be executed by instructions stored in a storage medium. When the instructions are executed by at least one computing or processing unit (for example, at least one processor, processor core, or other processing unit), the at least one processing unit may be caused to perform actions indicated by the instructions. In some embodiments, the storage medium may be a non-transitory computer-readable storage medium. For example, the non-transitory computer-readable storage medium may include a read-only memory (ROM), a random-access memory (RAM), a compact disc read-only memory (CD-ROM), a magnetic tape, a floppy disk, an optical data storage device, or the like.

In some embodiments, the storage medium is a non-transitory computer-readable storage medium. For example, the non-transitory computer-readable storage medium is a read-only memory (ROM), a random-access memory (RAM), a compact disc read-only memory (CD-ROM), a magnetic tape, a floppy disk, an optical data storage device, or the like.

An embodiment of the present disclosure further provides a computer program product, including at least one instruction. When the at least one instruction is executable by a processor of an electronic device, the electronic device is caused to perform the method for transmitting a media stream described above.

A person skilled in the art can easily think of other implementation solutions of the present disclosure after considering the specification and practicing the content disclosed herein. The present disclosure is intended to cover any variations, purposes or applicable changes of the present disclosure. Such variations, purposes or applicable changes follow the general principle of the present disclosure and include common knowledge or conventional technical means in the technical field which is not disclosed in the present disclosure. The specification and embodiments are merely considered as illustrative, and the real scope and spirit of the present disclosure are pointed out by the appended claims.

It should be noted that, the present disclosure is not limited to the precise structures that have been described above and shown in the accompanying drawings, and can be modified and changed in many ways without departing from the scope of the present disclosure. The scope of the present disclosure is defined by the appended claims.

**Claims**

1. A method for transmitting a media stream, applicable to a terminal, the method comprising:

   determining, from address information of a media stream with a plurality of bit rates, target address information of the media stream with a target bit rate in response to a frame acquisition instruction for the media stream;
   determining a starting position of to-be-acquired media frames corresponding to the target bit rate in the media stream; and
   sending a frame acquisition request carrying the target address information and the starting position to a server, wherein the frame acquisition request is configured to instruct the server to return, at the target bit rate, the media frames starting from the starting position in the media stream.

2. The method according to claim 1, wherein in response to the frame acquisition instruction being triggered by a playback operation for the media stream, said determining the starting position of to-be-acquired media frames corresponding to the target bit rate in the media stream comprises:

determining a position of a media frame, generated at an operation time of the playback operation, in the media stream as the starting position; or
determining a position of a media frame, selected by the frame acquisition instruction, in the media stream as the starting position; or
determining a position of a first media frame in the media stream as the starting position.

3. The method according to claim 1, wherein said determining , from the address information of the media stream with the plurality of bit rates, the target address information of the media stream with the target bit rate in response to the frame acquisition instruction for the media stream comprises:

acquiring playback status information of the media stream upon reception of any media frame in the media stream; and
determining, from the address information of the media stream with the plurality of bit rates, the target address information of the media stream with the target bit rate in response to the playback status information satisfying a bit rate switching condition;
said determining the starting position of the to-be-acquired media frames corresponding to the target bit rate in the media stream comprises:

determining the starting position of the to-be-acquired media frames corresponding to the target bit rate in the media stream according to a position of the any media frame in the media stream.

4. The method according to claim 3, wherein said determining, from the address information of the media stream with the plurality of bit rates, the target address information of the media stream with the target bit rate in response to the playback status information satisfying the bit rate switching condition comprises:

determining the target bit rate based on the playback status information and a current bit rate in response to the playback status information satisfying the bit rate switching condition; and
determining, from the address information of the media stream with the plurality of bit rates, the target address information of the media stream with the target bit rate in response to the target bit rate being not equal to the current bit rate.

5. The method according to claim 4, wherein the playback status information comprises a first cache volume, the first cache volume being a current cache volume of the media stream that has been cached but not played; and
said determining the target bit rate based on the playback status information and the current bit rate in response to the playback status information satisfying the bit rate switching condition comprises:
determining the target bit rate based on the playback status information and the current bit rate in response to the first cache volume being greater than a first cache volume threshold or the first cache volume being less than a second cache volume threshold, wherein the second cache volume threshold is less than the first cache volume threshold.

6. The method according to claim 4, wherein said determining the target bit rate based on the playback status information and the current bit rate comprises:

acquiring a plurality of candidate bit rates;
acquiring a second cache volume corresponding to each candidate bit rate according to a relationship between the plurality of candidate bit rates and the current bit rate, the playback status information, and a position of the any media frame of the media stream in a media frame group in which the any media frame is located; and
determining the target bit rate from the plurality of candidate bit rates according to a relationship between the second cache volume corresponding to each candidate bit rate and the first cache volume threshold or the second cache volume threshold;
wherein the second cache volume corresponding to each candidate bit rate is a cache volume of the media stream that has been cached but not played at the end of transmission of the media frame group in which the any media frame is located, in response to a bit rate being switched to the candidate bit rate.

7. The method according to claim 1, wherein the frame acquisition request further comprises at least one of a first extended parameter or a second extended parameter, wherein the first extended parameter indicates whether the media frames are audio frames, and the second extended parameter indicates that transmission of the media frames in the media stream starts from a target timestamp indicated by the second extended parameter.

**8.** The method according to claim 1, wherein the address information of the media stream with the plurality of bit rates is stored in a media presentation description of the media stream.

**9.** The method according to claim 8, wherein the media presentation description comprises a version number and a media description set, wherein the version number comprises at least one of a version number of the media presentation description or a version number of a resource transmission standard, the media description set comprises multiple pieces of media description meta-information, each piece of media description meta-information corresponds to the media stream of one bit rate, and each piece of media description meta-information comprises a length of a group of pictures and attribute information of the media stream with the bit rate corresponding to the media description meta-information.

**10.** A method for transmitting a media stream, applicable to a server, the method comprising:

receiving a frame acquisition request, wherein the frame acquisition request carries target address information of a media stream with a target bit rate and a starting position of to-be-acquired media frames corresponding to the target bit rate in the media stream;
acquiring, from an address corresponding to the target address information, the media frames starting from the starting position in response to the frame acquisition request; and
transmitting the media frames starting from the starting position to a terminal at the target bit rate.

**11.** The method according to claim 10, wherein said acquiring, from the address corresponding to the target address information, the media frames starting from the starting position comprises:

determining a target timestamp based on the starting position; and
determining and acquiring, based on the target timestamp, the media frames starting from the starting position.

**12.** The method according to claim 11, wherein in response to the starting position being a pulling position parameter, said determining the target timestamp based on the starting position comprises: determining the target timestamp based on an audio parameter and the pulling position parameter.

**13.** The method according to claim 12, wherein said determining the target timestamp based on the audio parameter and the pulling position parameter comprises:

determining a value obtained by subtracting an absolute value of the default value of the pulling position parameter from a maximum timestamp as the target timestamp in response to the pulling position parameter being a default value and the audio parameter being a default value or the audio parameter being false; or
determining a value obtained by subtracting an absolute value of the default value of the pulling position parameter from a maximum audio timestamp as the target timestamp in response to the pulling position parameter being a default value and the audio parameter being true; or
determining a maximum timestamp as the target timestamp in response to the pulling position parameter being equal to 0 and the audio parameter being a default value or the audio parameter being false; or
determining a maximum audio timestamp as the target timestamp in response to the pulling position parameter being equal to 0 and the audio parameter being true; or
determining a value obtained by subtracting an absolute value of the pulling position parameter from a maximum timestamp as the target timestamp in response to the pulling position parameter being less than 0 and the audio parameter being a default value or the audio parameter being false; or
determining a value obtained by subtracting an absolute value of the pulling position parameter from a maximum audio timestamp as the target timestamp in response to the pulling position parameter being less than 0 and the audio parameter being true; or
determining a maximum timestamp as the target timestamp when a timestamp fallback occurs in a cache in response to the pulling position parameter being greater than 0 and the audio parameter being a default value or the audio parameter being false; or
determining a maximum audio timestamp as the target timestamp when a timestamp fallback occurs in a cache in response to the pulling position parameter being greater than 0 and the audio parameter being true; or
determining the pulling position parameter as the target timestamp in response to the pulling position parameter being greater than 0 and no timestamp fallback occurring in a cache.

**14.** The method according to claim 13, further comprising:

determining that the timestamp fallback occurs in the cache in response to timestamps of media frames in a media frame sequence in the cache increasing non-monotonically; or
determining that no timestamp fallback occurs in the cache in response to timestamps of the media frames in a media frame sequence in the cache not increasing non-monotonically, wherein the media frame sequence is a sequence formed by a plurality of media frames cached in the cache.

15. The method according to claim 14, further comprising:

determining that a media frame sequence increases non-monotonically in response to the cache comprising a video resource and timestamps of keyframes in the keyframe sequence increasing non-monotonically, wherein the keyframe sequence is a sequence formed by a plurality of cached keyframes; or
determining that a media frame sequence increases non-monotonically in response to the cache not comprising a video resource and timestamps of audio frames in the audio frame sequence increasing non-monotonically, wherein the audio frame sequence is a sequence formed by a plurality of cached audio frames.

16. The method according to claim 11, wherein said determining and acquiring, based on the target timestamp, the media frames starting from the starting position comprises:

determining a target media frame as a media frame starting from the starting position in response to the target media frame being present in a currently valid cache, wherein a timestamp of the target media frame is greater than or equal to the target timestamp and is closest to the target timestamp; or
entering a waiting state in response to a target media frame being not present in a currently valid cache, and determining the target media frame as the media frame starting from the starting position in response to the target media frame being written into the currently valid cache, wherein a timestamp of the target media frame is greater than or equal to the target timestamp and is closest to the target timestamp; or
sending pulling failure information in response to a target media frame being not present in a currently valid cache and a difference between the target timestamp and a maximum timestamp being greater than a timeout threshold, wherein a timestamp of the target media frame is greater than or equal to the target timestamp and is closest to the target timestamp.

17. An apparatus for transmitting a media stream, applicable to a terminal, the apparatus comprising:

a determining module, configured to determine, from address information of a media stream with a plurality of bit rates, target address information of the media stream with a target bit rate in response to a frame acquisition instruction for the media stream;
the determining module being further configured to determine a starting position of to-be-acquired media frames corresponding to the target bit rate in the media stream; and
a sending module, configured to send a frame acquisition request carrying the target address information and the starting position to a server, wherein the frame acquisition request is configured to instruct the server to return, at the target bit rate, the media frames starting from the starting position in the media stream.

18. The apparatus according to claim 17, wherein in response to the frame acquisition instruction being triggered by a playback operation for the media stream, the determining module is configured to:

determine a position of a media frame, generated at an operation time of the playback operation, in the media stream as the starting position; or
determine a position of a media frame, selected by the frame acquisition instruction, in the media stream as the starting position; or
determine a position of a first media frame in the media stream as the starting position.

19. The apparatus according to claim 17, further comprising:

an acquiring module, configured to acquire playback status information of the media stream upon reception of any media frame in the media stream;
wherein the determining module is further configured to determine, from the address information of the media stream with the plurality of bit rates, the target address information of the media stream with the target bit rate in response to the playback status information satisfying a bit rate switching condition; and
the determining module is configured to determine the starting position of the to-be-acquired media frames corresponding to the target bit rate in the media stream according to a position of the any media frame in the media stream.

20. The apparatus according to claim 19, wherein the determining module is configured to:

determine the target bit rate based on the playback status information and a current bit rate in response to the playback status information satisfying the bit rate switching condition; and determine, from the address information of the media stream with the plurality of bit rates, the target address information of the media stream with the target bit rate in response to the target bit rate being not equal to the current bit rate.

21. The apparatus according to claim 20, wherein the playback status information comprises a first cache volume, the first cache volume being a current cache volume of the media stream that has been cached but not played; and
the determining module is configured to:
determine the target bit rate based on the playback status information and the current bit rate in response to the first cache volume being greater than a first cache volume threshold or the first cache volume being less than a second cache volume threshold, wherein the second cache volume threshold is less than the first cache volume threshold.

22. The apparatus according to claim 20, wherein the determining module is configured to:

acquire a plurality of candidate bit rates;
acquire a second cache volume corresponding to each candidate bit rate according to a relationship between the plurality of candidate bit rates and the current bit rate, the playback status information, and a position of the any media frame of the media stream in a media frame group in which the any media frame is located; and
determine the target bit rate from the plurality of candidate bit rates according to a relationship between the second cache volume corresponding to each candidate bit rate and the first cache volume threshold or the second cache volume threshold;
wherein the second cache volume corresponding to each candidate bit rate is a cache volume of the media stream that has been cached but not played at the end of transmission of the media frame group in which the any media frame is located in response to a bit rate being switched to the candidate bit rate.

23. The apparatus according to claim 17, wherein the frame acquisition request further comprises at least one of a first extended parameter or a second extended parameter, wherein the first extended parameter indicates whether the media frames are audio frames, and the second extended parameter indicates that transmission of the media frames in the media stream starts from a target timestamp indicated by the second extended parameter.

24. The apparatus according to claim 17, wherein the address information of the media stream with the plurality of bit rates is stored in a media presentation description of the media stream.

25. The apparatus according to claim 24, wherein the media presentation description comprises a version number and a media description set, wherein the version number comprises at least one of a version number of the media presentation description or a version number of a resource transmission standard, the media description set comprises multiple pieces of media description meta-information, each piece of media description meta-information corresponds to the media stream of one bit rate, and each piece of media description meta-information comprises a length of a group of pictures and attribute information of the media stream with the bit rate corresponding to the media description meta-information.

26. An apparatus for transmitting a media stream, applied to a server, comprising:

a receiving module, configured to receive a frame acquisition request, wherein the frame acquisition request carries target address information of a media stream with a target bit rate and a starting position of to-be-acquired media frames corresponding to the target bit rate in the media stream;
an acquiring module, configured to acquire, from an address corresponding to the target address information, the media frames starting from the starting position in response to the frame acquisition request; and
a transmission module, configured to transmit the media frames starting from the starting position to a terminal at the target bit rate.

27. The apparatus according to claim 26, wherein the acquiring module is configured to:

determine a target timestamp based on the starting position; and
determine and acquire, based on the target timestamp, the media frames starting from the starting position.

28. The apparatus according to claim 27, wherein in response to the starting position being a pulling position parameter, the acquiring module is configured to determine the target timestamp based on an audio parameter and the pulling position parameter.

29. The apparatus according to claim 28, wherein the acquiring module is configured to:

determine a value obtained by subtracting an absolute value of the default value of the pulling position parameter from a maximum timestamp as the target timestamp in response to the pulling position parameter being a default value and the audio parameter being a default value or the audio parameter being false; or

determine a value obtained by subtracting an absolute value of the default value of the pulling position parameter from a maximum audio timestamp as the target timestamp in response to the pulling position parameter being a default value and the audio parameter being true; or

determine a maximum timestamp as the target timestamp in response to the pulling position parameter being equal to 0 and the audio parameter being a default value or the audio parameter being false; or

determine a maximum audio timestamp as the target timestamp in response to the pulling position parameter being equal to 0 and the audio parameter being true; or

determine a value obtained by subtracting an absolute value of the pulling position parameter from a maximum timestamp as the target timestamp in response to the pulling position parameter being less than 0 and the audio parameter being a default value or the audio parameter being false; or

determine a value obtained by subtracting an absolute value of the pulling position parameter from a maximum audio timestamp as the target timestamp in response to the pulling position parameter being less than 0 and the audio parameter being true; or

determine a maximum timestamp as the target timestamp when a timestamp fallback occurs in a cache in response to the pulling position parameter being greater than 0 and the audio parameter being a default value or the audio parameter being false; or

determine a maximum audio timestamp as the target timestamp when a timestamp fallback occurs in a cache in response to the pulling position parameter being greater than 0 and the audio parameter being true; or

determine the pulling position parameter as the target timestamp in response to the pulling position parameter being greater than 0 and no timestamp fallback occurring in a cache.

30. The apparatus according to claim 29, wherein the acquiring module is further configured to:

determine that the timestamp fallback occurs in the cache in response to timestamps of media frames in a media frame sequence in the cache increasing non-monotonically; or

determine that no timestamp fallback occurs in the cache in response to timestamps of the media frames in a media frame sequence in the cache not increasing non-monotonically, wherein the media frame sequence is a sequence formed by a plurality of media frames cached in the cache.

31. The apparatus according to claim 30, wherein the acquiring module is configured to:

determine that a media frame sequence increases non-monotonically in response to the cache comprising a video resource and timestamps of keyframes in the keyframe sequence increasing non-monotonically, wherein the keyframe sequence is a sequence formed by a plurality of cached keyframes; or

determine that a media frame sequence increases non-monotonically in response to the cache not comprising a video resource and timestamps of audio frames in the audio frame sequence increasing non-monotonically, wherein the audio frame sequence is a sequence formed by a plurality of cached audio frames.

32. The apparatus according to claim 27, wherein the acquiring module is configured to:

determine a target media frame as a media frame starting from the starting position in response to the target media frame being present in a currently valid cache, wherein a timestamp of the target media frame is greater than or equal to the target timestamp and is closest to the target timestamp; or

enter a waiting state in response to a target media frame being not present in a currently valid cache, and determine the target media frame as the media frame starting from the starting position in response to the target media frame being written into the currently valid cache, wherein a timestamp of the target media frame is greater than or equal to the target timestamp and is closest to the target timestamp; or

send pulling failure information in response to a target media frame being not present in a currently valid cache and a difference between the target timestamp and a maximum timestamp being greater than a timeout threshold, wherein a timestamp of the target media frame is greater than or equal to the target timestamp and is closest to the target timestamp.

33. An electronic device, comprising:

at least one processor; and

at least one memory configured to store at least one instruction executable by the at least one processor;

wherein the at least one processor, when loading and executing the at least one instruction, is caused to perform:

determining, from address information of a media stream with a plurality of bit rates, target address information of the media stream with a target bit rate in response to a frame acquisition instruction for the media stream;

determining a starting position of to-be-acquired media frames corresponding to the target bit rate in the media stream; and

sending a frame acquisition request carrying the target address information and the starting position to a server, wherein the frame acquisition request is configured to instruct the server to return, at the target bit rate, the media frames starting from the starting position in the media stream.

34. An electronic device, comprising:

at least one processor; and
at least one memory configured to store at least one instruction executable by the at least one processor;

wherein the at least one processor, when loading and executing the at least one instruction to perform:

receiving a frame acquisition request, wherein the frame acquisition request carries target address information of a media stream with a target bit rate and a starting position of to-be-acquired media frames corresponding to the target bit rate in the media stream;

acquiring, from an address corresponding to the target address information, the media frames starting from the starting position in response to the frame acquisition request; and

transmitting the media frames starting from the starting position to a terminal at the target bit rate.

35. A storage medium storing at least one instruction therein, wherein the at least one instruction, when executed by a processor of an electronic device, causes the electronic device to perform:

determining, from address information of a media stream with a plurality of bit rates, target address information of the media stream with a target bit rate in response to a frame acquisition instruction for the media stream;

determining a starting position of to-be-acquired media frames corresponding to the target bit rate in the media stream; and

sending a frame acquisition request carrying the target address information and the starting position to a server, wherein the frame acquisition request is configured to instruct the server to return, at the target bit rate, the media frames starting from the starting position in the media stream.

36. A storage medium storing at least one instruction therein, wherein the at least one instruction, when executed by a processor of an electronic device, causes the electronic device to perform:

receiving a frame acquisition request, wherein the frame acquisition request carries target address information of a media stream with a target bit rate and a starting position of to-be-acquired media frames corresponding to the target bit rate in the media stream;

acquiring, from an address corresponding to the target address information, the media frames starting from the starting position in response to the frame acquisition request; and

transmitting the media frames starting from the starting position to a terminal at the target bit rate.

FIG. 1

FIG. 2

Determining, from address information of a media stream with a plurality of bit rates, target address information of the media stream with a target bit rate in response to a frame acquisition instruction for the media stream ⟋ S31

Determining a starting position of to-be-acquired media frames corresponding to the target bit rate in the media stream ⟋ S32

Sending a frame acquisition request carrying the target address information and the starting position to a server ⟋ S33

FIG. 3

Receiving a frame acquisition request ⟋ S41

Acquiring, from an address corresponding to target address information, media frames starting from a starting position in response to the frame acquisition request ⟋ S42

Transmitting the media frames starting from the starting position to a terminal at a target bit rate ⟋ S43

FIG. 4

| Server | | Terminal |
|---|---|---|

S51, the terminal acquires playback status information of a media stream upon reception of any media frame in the media stream

S52, the terminal determines a target bit rate based on the playback status information and a current bit rate in response to the playback status information satisfying a bit rate switching condition

S53, the terminal receives a frame acquisition instruction for the media stream

S54, the terminal determines target address information of the media stream with the target bit rate from address information of the media stream with a plurality of bit rates in response to the frame acquisition instruction for the media stream

S55, the terminal determines a starting position of to-be-acquired media frames corresponding to the target bit rate in the media stream

S56, the terminal sends a frame acquisition request carrying the target address information and the starting position to the server

S57, the server receives and responds to the frame acquisition request, and acquires, from an address corresponding to the target address information, the media frames starting from the starting position

S58, the server transmits the media frames starting from the starting position to the terminal at the target bit rate

FIG. 5

12000　11000　10000　9000　8000　7000　6000　5000　4000　3000　2000　1000

FIG. 6

```
┌──────────────┐                              ┌──────────────┐
│Pulling position│                             │   Target     │
│  parameter    │                              │  timestamp   │
│  (@fasSpts)   │                              └──────────────┘
└──────────────┘

    ┌─────────────────────┐
 →  │ @fasSpts = defaultSpts │
    └─────────────────────┘
         ┌──────────────────────────┐
      →  │ @onlyAudio = false/ Default │
         │         value             │
         └──────────────────────────┘
              ┌────────────────────────┐        ┌──────────────────────────────┐
           →  │ There is a video resource in │ → │ latestVideoPts − | defaultSpts | │
              │        a cache          │       └──────────────────────────────┘
              └────────────────────────┘
              ┌────────────────────────┐        ┌──────────────────────────────┐
           →  │ There is no video resource │  → │ latestAudioPts − | defaultSpts | │
              │     in the cache        │       └──────────────────────────────┘
              └────────────────────────┘
         ┌────────────────────────┐
      →  │   @onlyAudio = true     │  ───────────────────────────→
         └────────────────────────┘

    ┌─────────────────┐
 →  │  @fasSpts = 0   │
    └─────────────────┘
         ┌──────────────────────────┐
      →  │ @onlyAudio = false/Default │
         │         value             │
         └──────────────────────────┘
              ┌────────────────────────┐        ┌──────────────────┐
           →  │ There is a video resource in │ → │  latestVideoPts  │
              │        a cache          │       └──────────────────┘
              └────────────────────────┘
              ┌────────────────────────┐        ┌──────────────────┐
           →  │ There is no video resource │  → │  latestAudioPts  │
              │     in the cache        │       └──────────────────┘
              └────────────────────────┘
         ┌────────────────────────┐
      →  │   @onlyAudio = true     │  ───────────────────────────→
         └────────────────────────┘

    ┌─────────────────┐
 →  │  @fasSpts < 0   │
    └─────────────────┘
         ┌──────────────────────────┐
      →  │ @onlyAudio = false/Default │
         │         value             │
         └──────────────────────────┘
              ┌────────────────────────┐        ┌──────────────────────────────┐
           →  │ There is a video resource in │ → │ latestVideoPts - | @fasSpts | │
              │        a cache          │       └──────────────────────────────┘
              └────────────────────────┘
              ┌────────────────────────┐        ┌──────────────────────────────┐
           →  │ There is no video resource │  → │ latestAudioPts - | @fasSpts | │
              │     in the cache        │       └──────────────────────────────┘
              └────────────────────────┘
         ┌────────────────────────┐
      →  │   @onlyAudio = true     │  ───────────────────────────→
         └────────────────────────┘

    ┌─────────────────┐
 →  │  @fasSpts > 0   │
    └─────────────────┘
         ┌──────────────────┐
      →  │ Timestamp fallback │
         │      occurs        │
         └──────────────────┘
              ┌──────────────────────────┐
           →  │ @onlyAudio = false/Default │
              │         value             │
              └──────────────────────────┘
                   ┌────────────────────────┐     ┌──────────────────┐
                →  │ There is a video resource in │→│  latestVideoPts  │
                   │        a cache          │    └──────────────────┘
                   └────────────────────────┘
                   ┌────────────────────────┐     ┌──────────────────┐
                →  │ There is no video resource │ →│  latestAudioPts  │
                   │     in the cache        │    └──────────────────┘
                   └────────────────────────┘
              ┌────────────────────────┐
           →  │   @onlyAudio = true     │  ──────────────────────→
              └────────────────────────┘
         ┌──────────────────────┐              ┌──────────────────┐
      →  │ No timestamp fallback │  ─────────→ │     @fasSpts     │
         │       occurs          │             └──────────────────┘
         └──────────────────────┘
```

FIG. 7

Apparatus for transmitting a
media stream

Determining module    801

Sending module    802

FIG. 8

Apparatus for transmitting a
media stream

Receiving module    901

Acquiring module    902

Transmission module    903

FIG. 9

FIG. 10

FIG. 11

| INTERNATIONAL SEARCH REPORT | International application No. |
|---|---|
| | **PCT/CN2020/138855** |

**A. CLASSIFICATION OF SUBJECT MATTER**

H04N 21/2662(2011.01)i

According to International Patent Classification (IPC) or to both national classification and IPC

**B. FIELDS SEARCHED**

Minimum documentation searched (classification system followed by classification symbols)

H04N; H04L

Documentation searched other than minimum documentation to the extent that such documents are included in the fields searched

Electronic data base consulted during the international search (name of data base and, where practicable, search terms used)

CNABS, CNKI, CNTXT, VEN, WOTXT, USTXT, EPTXT: 流媒体, 多码率, 选择, 切换, 调整, 码率, 位置, 摘要, 属性信息, 缓存, 阈值, 时间戳, 音频参数, 单调, 递增, 回退, 关键帧, stream, media, multi, rate, select, switch, adjust, location, abstract, attribute, information, cache, threshold, time, stamp, audio, parameter, monotone, increasing, back, key, frame

**C. DOCUMENTS CONSIDERED TO BE RELEVANT**

| Category* | Citation of document, with indication, where appropriate, of the relevant passages | Relevant to claim No. |
|---|---|---|
| X | CN 103974147 A (BEIJING UNIVERSITY OF POSTS AND TELECOMMUNICATIONS) 06 August 2014 (2014-08-06) description, paragraphs [0001]-[0158] | 1-4, 7-20, 23-36 |
| Y | CN 103974147 A (BEIJING UNIVERSITY OF POSTS AND TELECOMMUNICATIONS) 06 August 2014 (2014-08-06) description, paragraphs [0001]-[0158] | 5, 6, 21, 22 |
| Y | CN 108184152 A (HUBEI UNIVERSITY) 19 June 2018 (2018-06-19) description, paragraphs [0001]-[0108] | 5, 6, 21, 22 |
| A | CN 103369355 A (HUAWEI TECHNOLOGIES CO., LTD.) 23 October 2013 (2013-10-23) entire document | 1-36 |
| A | CN 101771492 A (HUAWEI TECHNOLOGIES CO., LTD.) 07 July 2010 (2010-07-07) entire document | 1-36 |
| A | CN 102333083 A (ZTE CORPORATION) 25 January 2012 (2012-01-25) entire document | 1-36 |
| A | US 2008145025 A1 (GEN INSTRUMENT CORP.) 19 June 2008 (2008-06-19) entire document | 1-36 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 March 2021** | **12 March 2021** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088 China | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/138855**

| Patent document cited in search report | | | Publication date (day/month/year) | Patent family member(s) | | | Publication date (day/month/year) |
|---|---|---|---|---|---|---|---|
| CN | 103974147 | A | 06 August 2014 | None | | | |
| CN | 108184152 | A | 19 June 2018 | CN | 108184152 | B | 24 January 2020 |
| CN | 103369355 | A | 23 October 2013 | WO | 2013152580 | A1 | 17 October 2013 |
| | | | | EP | 2822274 | A8 | 04 March 2015 |
| | | | | US | 2014139735 | A1 | 22 May 2014 |
| | | | | EP | 2822274 | A4 | 11 March 2015 |
| | | | | EP | 2822274 | A1 | 07 January 2015 |
| CN | 101771492 | A | 07 July 2010 | None | | | |
| CN | 102333083 | A | 25 January 2012 | CN | 102333083 | B | 05 April 2017 |
| | | | | WO | 2012151865 | A1 | 15 November 2012 |
| US | 2008145025 | A1 | 19 June 2008 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020100548308